# EUROPEAN PATENT SPECIFICATION

(11) **EP 0 679 973 B1**
(45) Date of publication and mention of the grant of the patent: **20.06.2001**
(21) Application number: 95110796.0
(22) Date of filing: 10.12.1990
(51) Int. Cl.: G05D 1/00

(54) **Integrated vehicle positioning and navigations system, apparatus and method**
Integriertes Fahrzeugpositionier- und -navigationssystem; dessen Vorrichtung und Verfahren
Procédé, appareil et système de navigation et de positionnement intégrés pour véhicules

(30) Priority: 11.12.1989 WO PCT/US89/05580
(43) Date of publication of application: 02.11.1995
(62) Divisional of application: 91902277.2
(73) Proprietor: CATERPILLAR INC., Peoria Illinois 61629-6490 (US)
(72) Inventor: Kyrtsos, Christos T., Southfield, Michigan 48076 (US); Gudat, Adam J., Edelstein, Illinois 61516 (US); Christensen, Dana A., Dunlap, Illinois 61525 (US); Friedrich, Douglas W., Pekin, Illinois 61554 (US); Stafford, Darrell E., Dunlap, Illinois 61525 (US); Sennott, James W., Bloomington, Illinois 61701 (US); Bradbury, Walter J., Ontario L4B 3G1 (CA); Clow, Richard G., Mesa, Arizona 85202 (US); Devier, Lonnie J., Dunlap, Illinois 61525 5213 (US); Kemner, Carl A., Peoria Heights, Illinois 61614 (US); Kleimenhagen, Karl W., Peoria, Illinois 61614 (US); Koehrsen, Craig L., Peoria, Illinois 61604 (US); Lay, Norman K., Peoria, Illinois 61615 (US); Peterson, Joel L., East Peoria, Illinois 616115 (US); Rao, Prithvi N., PPittsburgh, Pennsylvania 15202 (US); Schmidt, Larry E., Chillicothe, Illinois 61523 (US); Shaffer, Gary K., Butler, Pennsylvania 16001 (US); Shi, WenFan, Pittsburgh, Pennsylvania 15237 (US); Shin, Dong Hun, Guro-Gui, Guro 1, Dong S Seoul (KR); Singh, Sanjiv J., Pittsburgh, Pennsylvania 15217 (US); Weinbeck, Louis J., Livingston, Texas 77351 (US); West, Jay H., Junction City, Kansas 66441 (US); Whittaker, William L., Pittsburgh, Pennsylvania 15207 (US); Wu, BaoXin (NMI), Pittsburgh, Pennsylvania 15217 (US)
(74) Representative: Brunner, Michael John

(56) References cited:
- EP-A- 0 221 643
- EP-A- 0 341 889
- DE-A- 3 538 908
- DE-A- 3 736 386
- DE-A- 3 912 353
- PATENT ABSTRACTS OF JAPAN vol. 9 no. 151 (P-367) & JP-A-06 027905 (TATEISHI DENKI KK)
- IEEE JOURNAL OF ROBOTICS AND AUTOMATION, vol. 4, no. 3, June 1988 NEW YORK US, pages 241-255, C. ISIK ET AL. 'Pilot level of a hierarchical controller for an unmanned mobile robot'

## Description

### Background of the Invention

### 1. Field of the Invention

The present invention relates to positioning systems, and more particularly, to a positioning system and method for determining the terrestrial position of an autonomous vehicle on or near the planet Earth's surface.

### 2. Related Art

Several national governments, including the United States (U.S.) of America, are presently developing a terrestrial position determination system, referred to generically as a global positioning system (GPS). In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined.

The U.S. government has designated its GPS the "NAVSTAR." The NAVSTAR GPS will be declared operational by the U.S. government in 1993. Moreover, the government of the Union of Soviet Socialist Republics (U.S.S.R.) is currently developing a GPS known as "GLONASS," which is substantially similar to the NAVSTAR GPS.

In the NAVSTAR GPS, it is envisioned that four orbiting GPS satellites will exist in each of six separate orbits. A total of 24 GPS satellites will be in orbit at any given time with 21 GPS satellites in operation and 3 GPS satellites serving as spares. The three GPS satellite orbits will have mutually orthogonal planes relative to the Earth. The GPS satellite orbits will be neither polar orbits nor equatorial orbits. Moreover, the GPS satellites will orbit the Earth once every 12 hours.

Using the NAVSTAR GPS, the relative position of orbiting GPS satellites with respect to any Earth receiver can be determined from the electromagnetic signals. The relative position is commonly referred to as a "pseudorange." Moreover, the relative position can be calculated by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting satellites. Almanac data relating to the satellite position data of the NAVSTAR GPS is publicly available. Reference to this almanac data in regard to data encoded in the electromagnetic signals allows for an accurate derivation of pseudoranges. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Furthermore, by knowing the relative position of at least three of the orbiting GPS satellites, the absolute terrestrial position (that is, longitude, latitude, and altitude with respect to the Earth's center) of any Earth receiver can be computed via simple geometric theory involving triangulation methods. The accuracy of the terrestrial position estimate depends in part on the number of orbiting GPS satellites that are sampled. Using more GPS satellites in the computation can increase the accuracy of the terrestrial position estimate.

Conventionally, four GPS satellites are sampled to determine each terrestrial position estimate because of errors contributed by circuit clock differentials among the Earth receiver and the various GPS satellites. Clock differentials could be several milliseconds. If the Earth receiver's clock were synchronized with that of the GPS satellites, then only three GPS satellites would need to be sampled to pinpoint the location of the Earth receiver.

In the NAVSTAR GPS, electromagnetic signals are continuously transmitted from all of the GPS satellites at a single carrier frequency. However, each of the GPS satellites has a different modulation scheme, thereby allowing for differentiation of the signals. In the NAVSTAR GPS, the carrier frequency is modulated using a pseudorandom signal which is unique to each GPS satellite. Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of an Earth receiver to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences are extremely long, so that the sequences repeat no more than once every 267 days. As a result, the terrestrial position of any Earth receiver can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, the Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals from the different GPS satellites.

Because multiple PRN signals are received simultaneously at the Earth receiver, a common time interval exists wherein some of the codes can conflict. In other words, the codes cause a degradation in measurements of the time of arrival of each received PRN because of the cross correlations between conflicting received signals.

The time of arrival measurement for each PRN signal is made by determining the time of a peak amplitude of a cross correlation between the gold code sequence of the received PRN signal and the locally- derived PRN signal. When a locally-derived PRN signal is superimposed over a received PRN signal thereby increasing the averaging time of their cross correlation, the average noise contribution decreases. However, because the cross correlation errors between the received PRN signals are periodic, increasing the averaging time also results in increases to both the error signal and the cross correlation value between the received PRN's alike. Consequently, errors relating to the time of arrival of PRN signals are not reduced by cross correlation.

In addition to the GPS, it is known in the conventional art to use inertial systems in navigation systems to obtain position estimates of vehicles. Such an inertial reference unit (IRU) obtains specific-force measurements from accelerometers in a reference coordinate frame which is stabilized by gyroscopes, or gyros. An IRU can be of several types, including for example, laser, mechanical, or fiber optic. In an unaided navigation system using an IRU, the specific force (corrected for the effects of the Earth's gravity) as measured by an accelerometer is integrated into a navigation mathematical equation to produce the vehicle's position and velocity.

The instrument measurements of the IRU may be specified in a different rectangular coordinate frame than the reference navigation frame, depending on the platform implementation. The most commonly used reference navigation frame for near Earth navigation is the local-level frame (east-north-vertical). Several gimballed platform implementations exist with the forgoing reference navigation frame.

In a gimballed, local level-north seeking IRU, the gyroscopes and accelerometers are mounted on a platform which is torqued to maintain the platform level and azimuth pointing to the north. The platform is the reference plane. In contrast, in a gimballed, local-level azimuth-wander IRU, the platform is maintained level, but is not torqued about the vertical axis.

Furthermore, in a strap-down IRU, the gyroscopes and the accelerometers are directly mounted on the vehicle body. They measure the linear and angular motion of the vehicle relative to inertial space. The motion is expressed in vehicle coordinates. Therefore, in a strap-down IRU, it is necessary to first compute the altitude of the vehicle to the referenced navigation frame. Then, the computed altitude is used to transform the accelerometer measurements into the reference frame. After the accelerometer data of a strap-down IRU has been extrapolated into the reference frame, the solution of the navigation equations mentioned previously is identical in both the gimballed IRU and the strap-down IRU.

In the strap-down IRU, the altitude computations, which are required to resolve accelerometer measurements, are usually carried out at a high rate. The computations suffer from numerical errors because of the limited computer byte size and throughput availability. These computation errors depend on the frequency response of the sensor loop, data rate, and resolution and magnitude of the sensor output at the sampling time.

However, significant benefits arise from using the strap-down IRU, rather than the gimballed IRU. The strap-down IRUs are less costly. Moreover, the strap-down IRUs are generally smaller in physical size. Thus, the potential to realize size and cost savings in IRUs can make strap-down IRUs attractive for both military and commercial applications.

The performance of navigation systems using IRUs is primarily limited by errors contributed by the various constituent sensors within the IRUs. Gyroscopes drift. Accelerometers have inherent biases. Further, errors are contributed from improper scale factors and improper IRU alignment angles. Typically, the preceding errors cause inaccuracies in the estimates of vehicle positions, velocity, and altitude, which accumulate over time as a vehicle mission progresses. To some extent, the errors are dependent on user dynamics.

If a very accurate navigation system is required for a vehicle, high precision gyroscopes and accelerometers can be utilized to satisfy that need. However, such high precision equipment increases the complexity and costs of the vehicle.

EP-A-0221643 discloses a robot navigation system employing cameras.

EP-A-0181012 discloses a vehicle position estimating system combining GPS and inertial navigation systems. IEEE Position Location and Navigation Symposium, 4-7 Nov 1986, discloses an inertial navigation system with GPS comparison.

DE-A-3310111 discloses a navigation system with drift compensation. US-A-3630079 discloses a navigation system utilizing multiple sensors and error correction.

According to the present invention, there is provided a method of operating an autonomous navigation system on a vehicle, the method comprising the steps of:
(1) initializing the system;
(2) waiting for messages to arrive in a message queue;
(3) upon receipt of a message, determining and setting a series of status flags to place the system (406) in a known state particular to the message;
(4) carrying out an appropriate action in accordance with the message;
(5) returning to step.

According to the present invention there is further provided an autonomous navigation system on a vehicle, the system comprising:
(1) means for initializing the system;
(2) means for waiting for messages to arrive in a message que, comprising means for determining and means for setting a series of status flags to place the system in a known state particular to a message, activated upon receipt of a message; and
(3) means for carrying out an appropriate action in accordance with the message.

The present invention can be used to aid any navigation system for autonomous vehicles. The autonomous vehicles can be stationary or moving. Moreover, the autonomous vehicles can be at or near the Earth's surface. In other words, the present invention provides for highly accurate and fast tracking of any terrestrial vehicle. It provides both apparatuses and methods, which allow for a superior positioning capability and, consequently, a flexible autonomous navigational capability.

Further features and advantages of the present invention will become apparent to one of skill in the art upon examination of the following drawings and detailed description. It is intended that any additional features and advantages be incorporated herein.

### Brief Description of the Drawings

The present invention as defined in the claims can be better understood with reference to the text and to the following drawings.
Figure 1 illustrates a block diagram of the preferred embodiment of the present invention;
Figure 1A is a block diagram 100A of the operational GPS satellites in the NAVSTAR GPS;

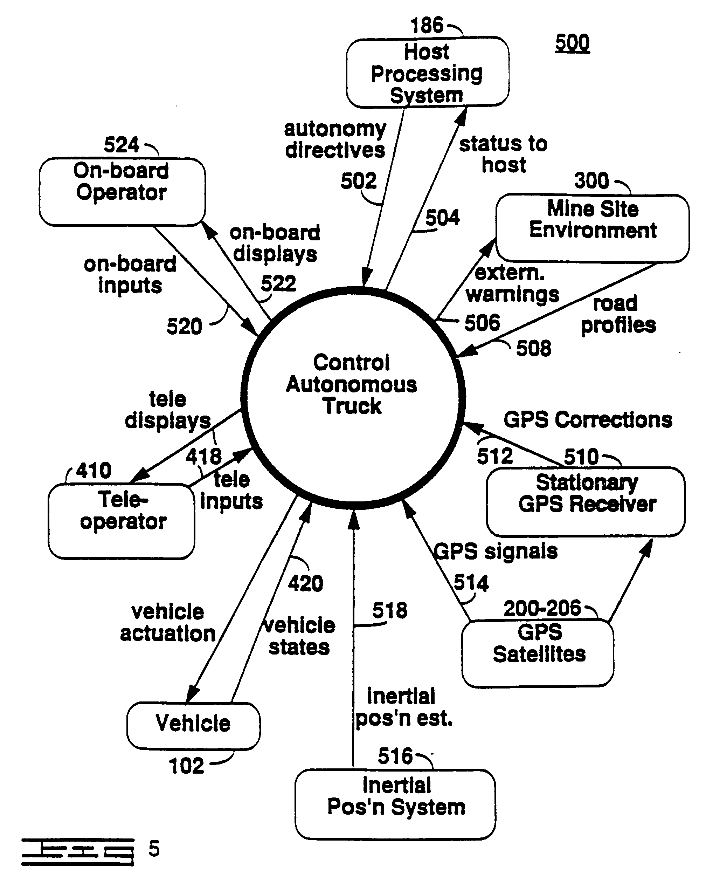

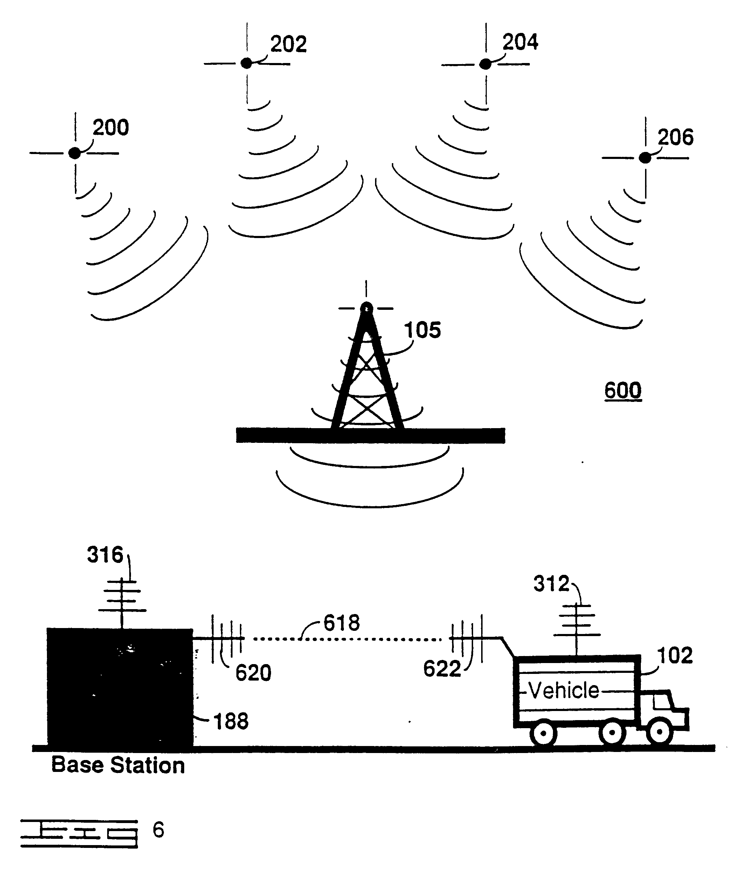

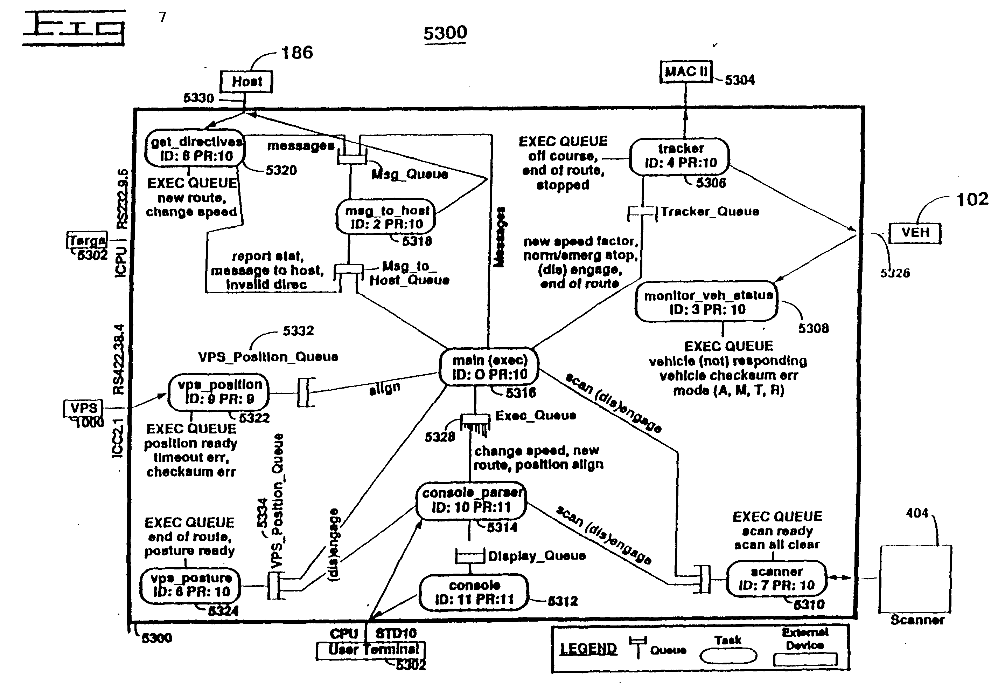

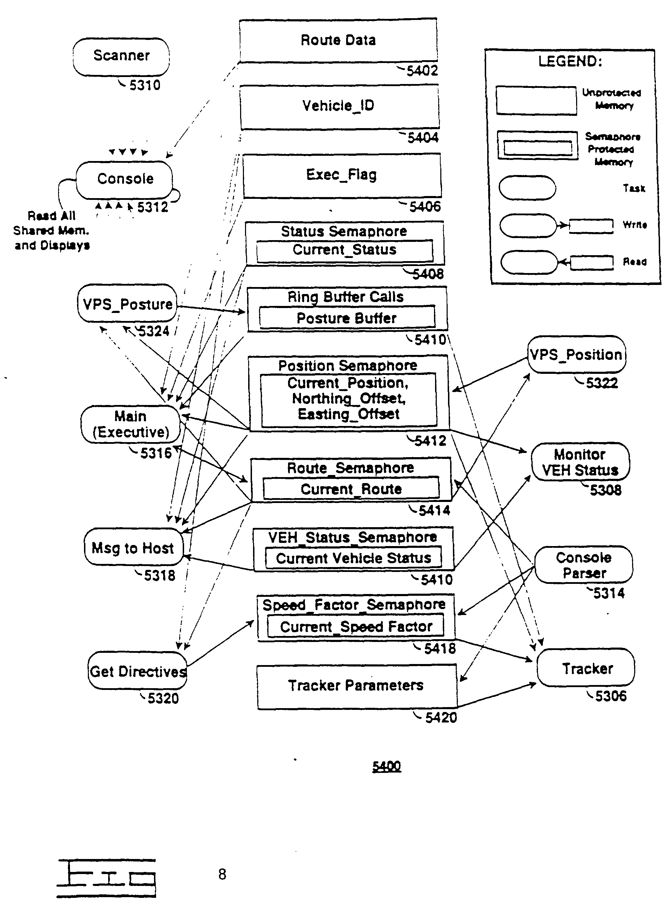

Figure 2 illustrates four, simultaneous, navigation equations regarding four GPS satellites of the NAVSTAR GPS;

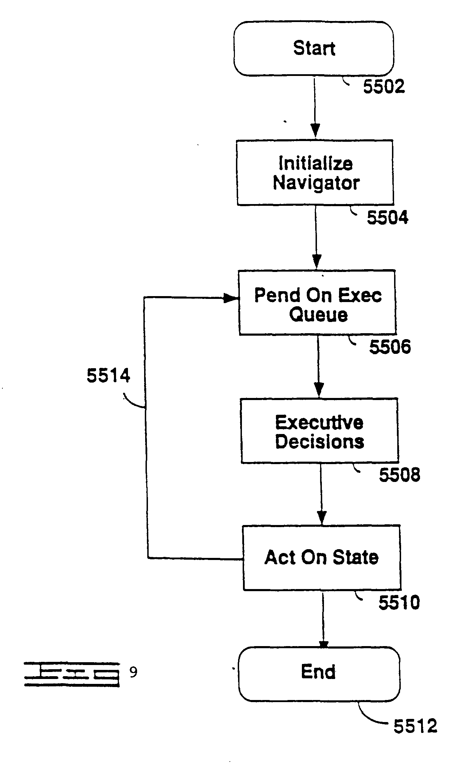

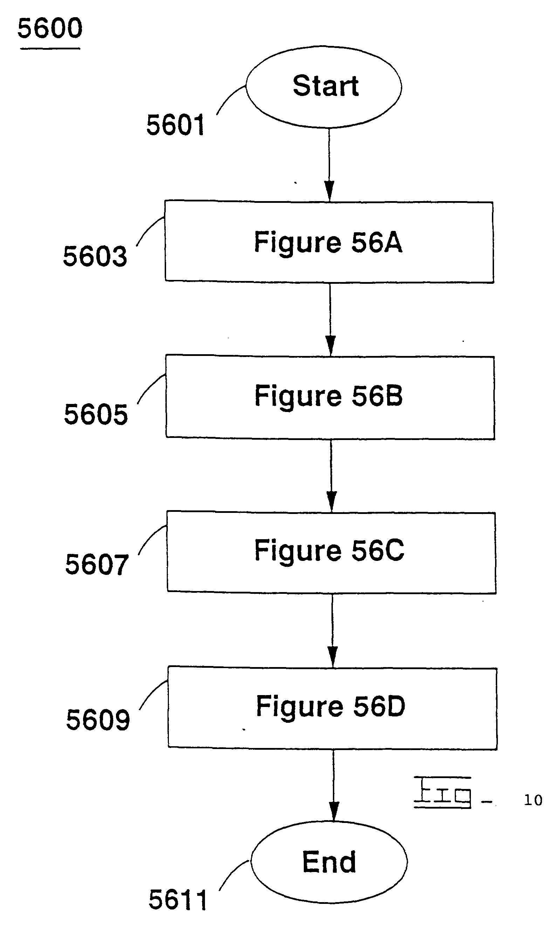

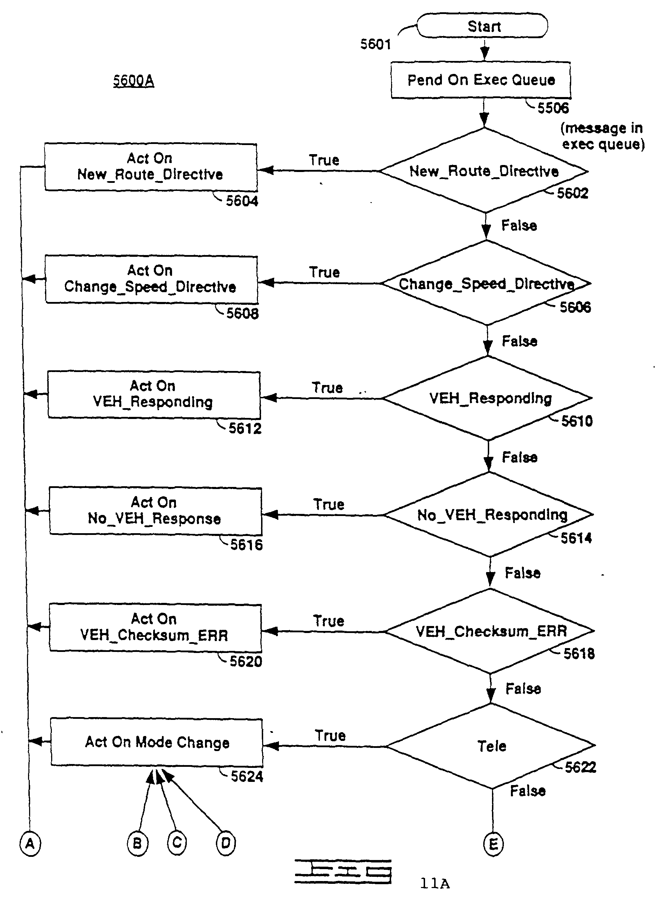

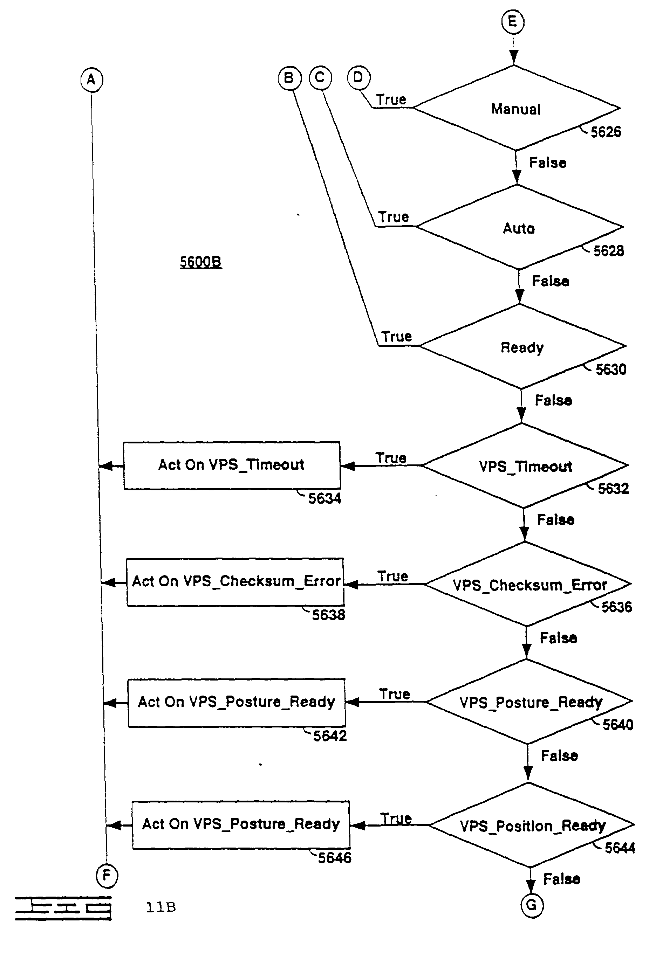

Figure 3 is a block diagram of a typical autonomous work site;

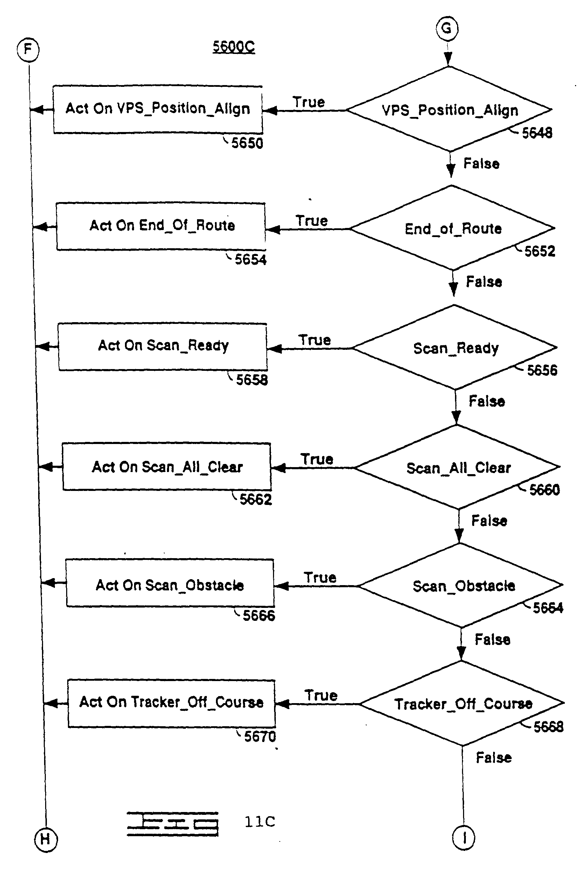

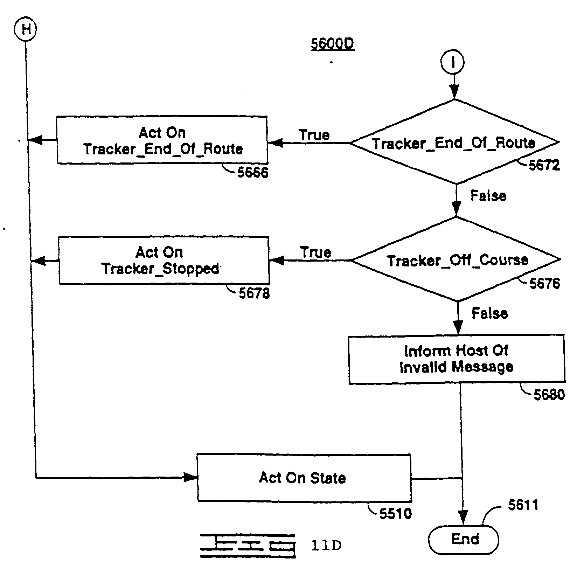

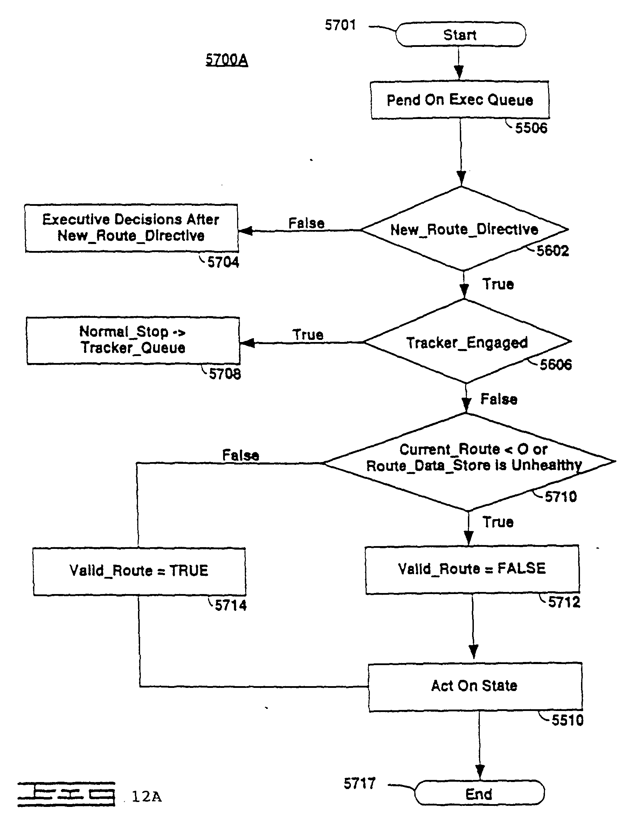

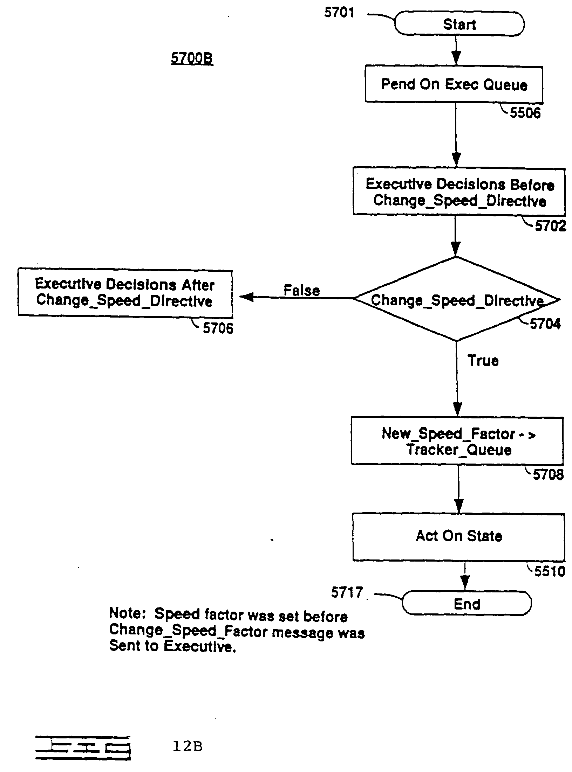

Figure 4 is a block diagram of the interrelationships between a navigator, a vehicle VPS architecture, and vehicle controls of the present invention;

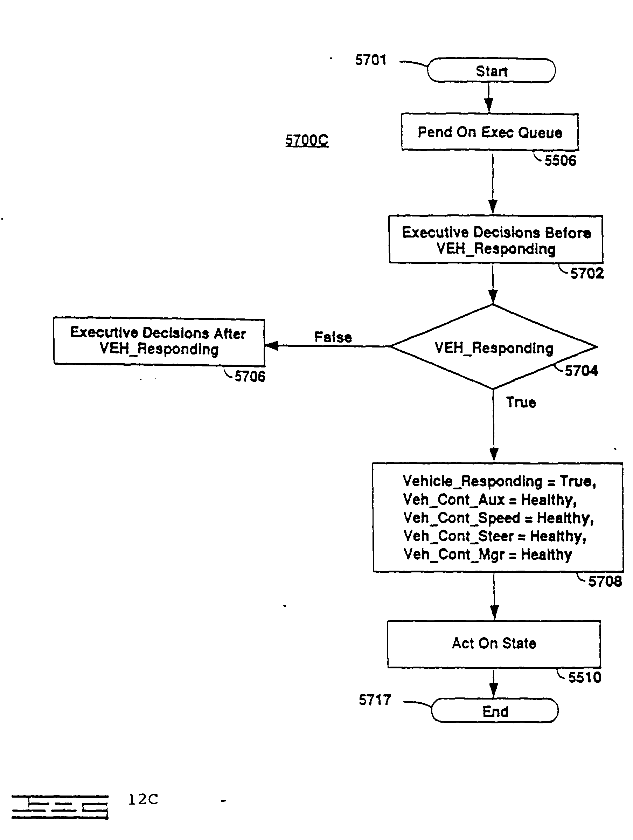

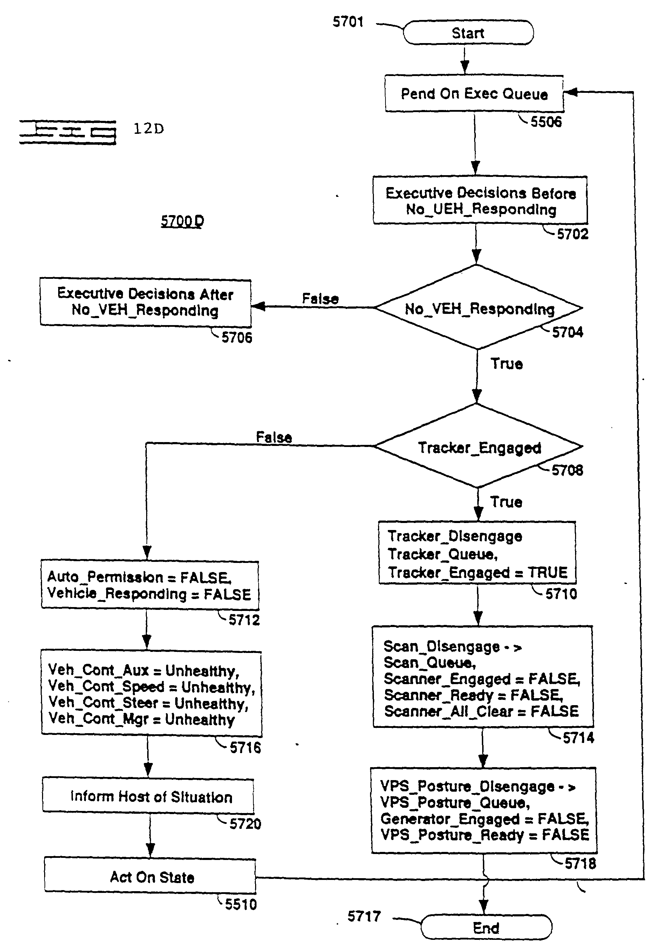

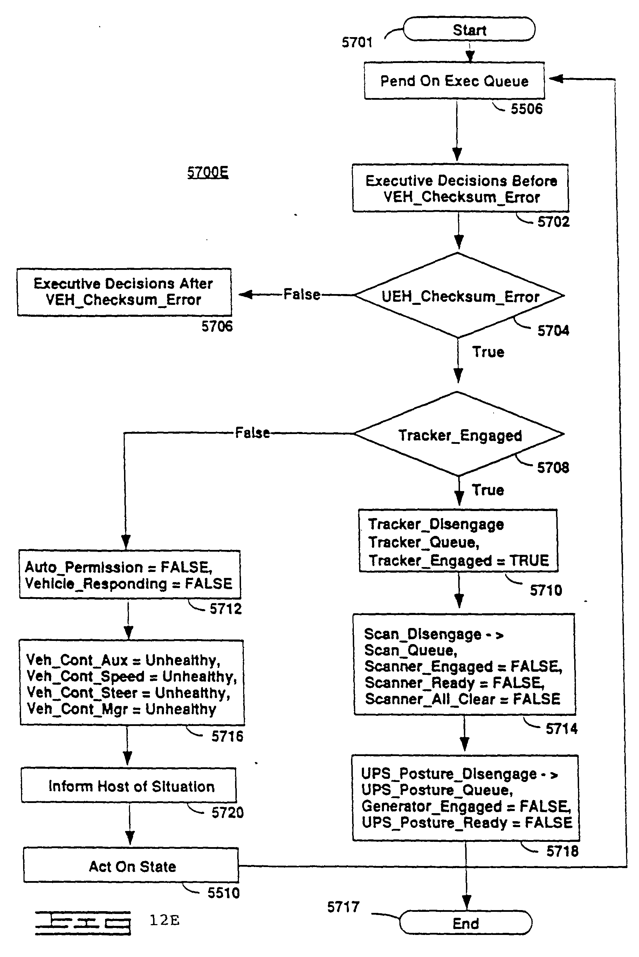

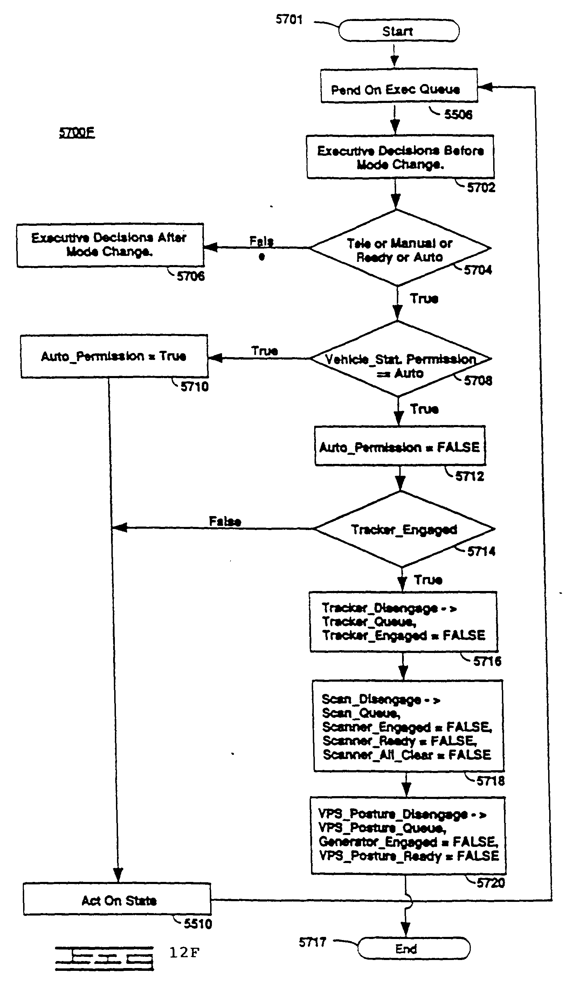

Figure 5 is a block diagram illustrating elements in an autonomous control system;

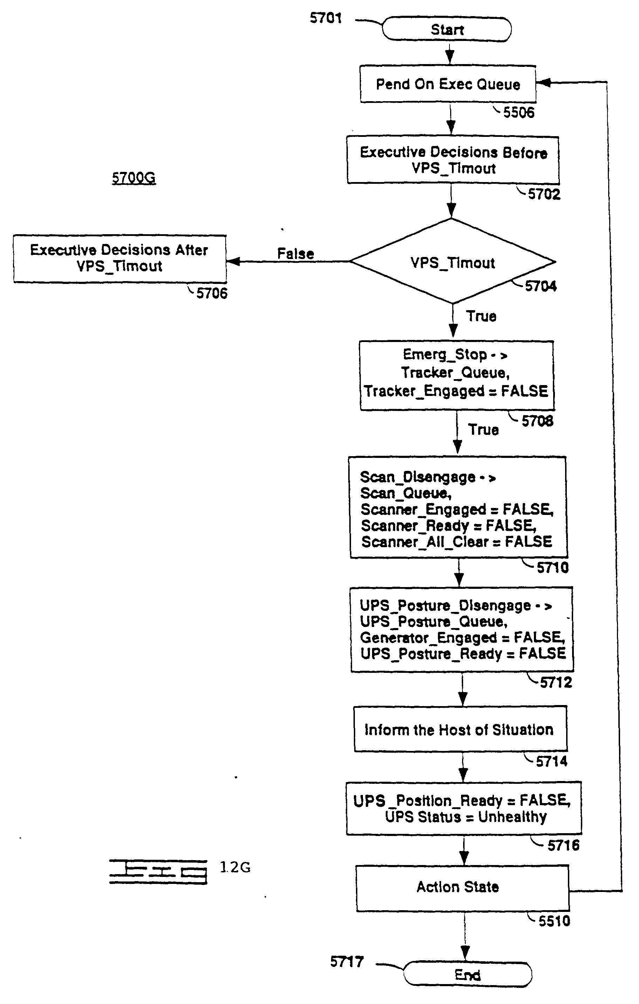

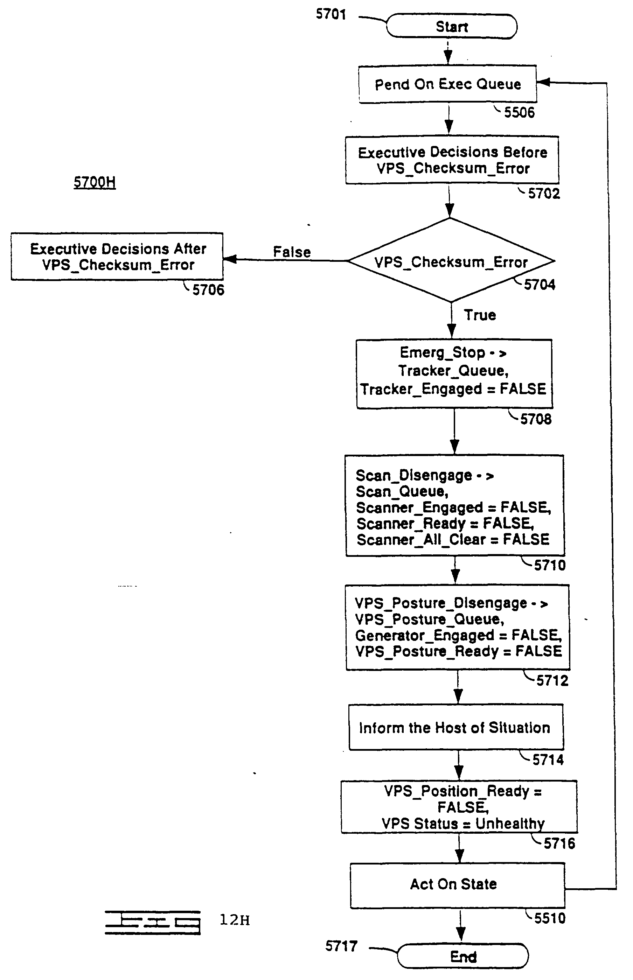

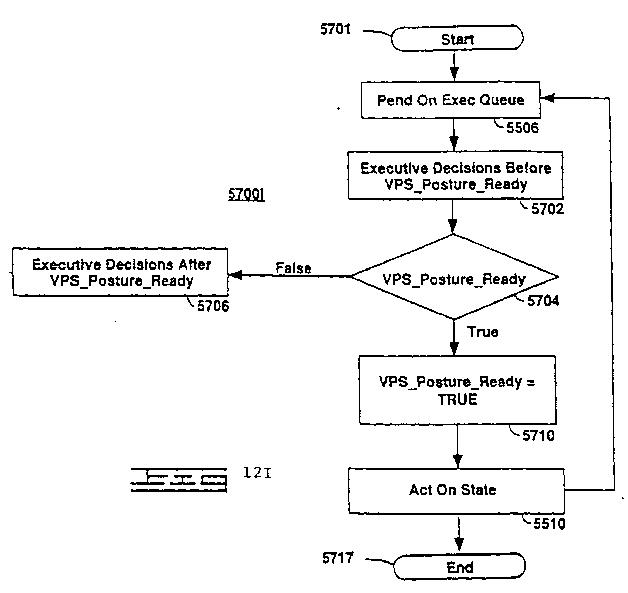

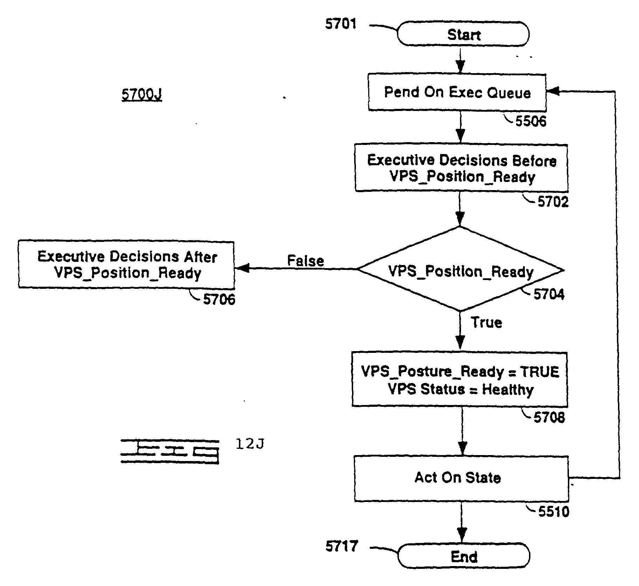

Figure 6 is a block diagram of the operation of a GPS;
Figure 7 is a communications diagram showing tasks of a navigator;
Figure 8 is a communications diagram showing an embodiment of navigator shared memory of a navigator;
Figure 9 is a flowchart pertaining to executive decisions;

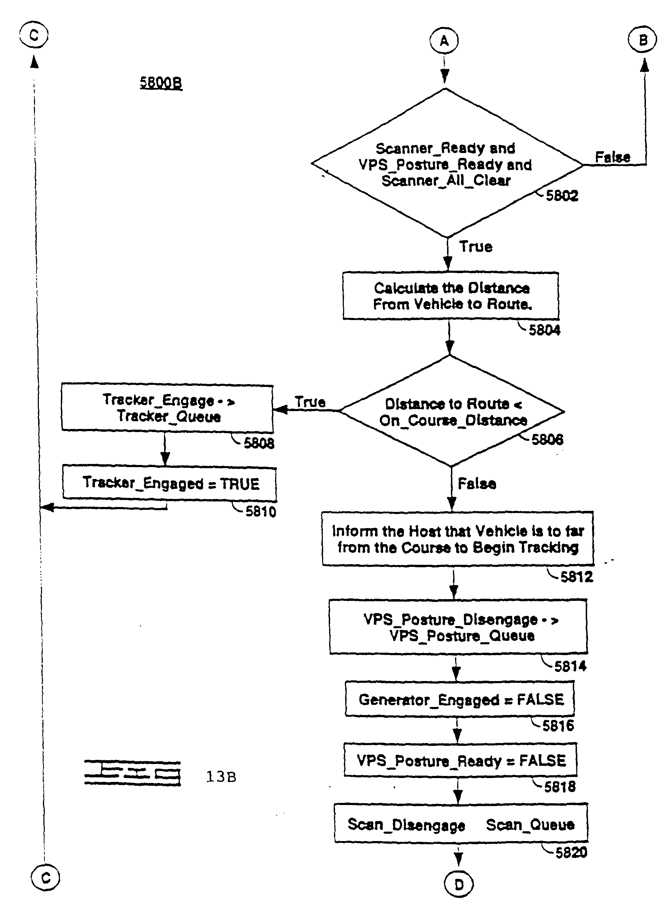

Figure 10 is a flowchart of the relationship/connection of executive flowcharts 5600A-5600D of respective figures 11A-11D;
Figures 11A-11D are executive flowcharts 5600A-5600D, respectively, of the high level executive flowchart;
Figures 12a-12R are respective flowcharts 5700A-2700R, each showing "act on" blocks of the executive flowcharts;
Figure 13 is a high level flowchart of the interrelation of respective figures 58A-58C; and
Figures 13A-13C are respective flowcharts 5800A-5800C showing the "act on state" block in each of the executive flowcharts 5700A-5700Q.

### I. Definitions

**(1)** "Absolute position" in the context of this document refers to a position relative to the center of the Earth. Generally, an absolute position will be in reference to a vehicle or the base station, both on or near the Earth's surface. First, second, and third position estimates are all absolute positions in the preferred embodiment of the present invention.
**(2)** "Actual pseudorange" means an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Actual pseudoranges are approximated by first measuring the propagation time delays between transmission and reception of the electromagnetic signals emanated from the GPS satellites and/or pseudolites. Actual pseudoranges can be readily calculated by multiplying the calculated time delays by the speed of light, or 2.9979245898 * 10⁸ m/s.
**(3)** "Anti-selective availability" refers to a method/technique/process for detecting and compensating for corrupted GPS data in the coarse/acquisition (C/A) mode of modulation.
**(4)** "Autonomous" is used in this document in its conventional sense. It indicates operation which is either completely automatic or substantially automatic or without significant human involvement in the operation. Generally, an autonomous vehicle means an unmanned vehicle in operation, or a vehicle in operation without a human pilot or co-pilot. However, an autonomous vehicle may be driven or otherwise operated automatically and also have a human passenger(s) as well.
(5) "Constellation" refers to a group comprised of GPS satellites and/or pseudolites whose signals are utilized to derive an absolute position estimate of a point or on near the Earth's surface. See "optimal constellation" below.
(6) "Data radio" refers to a transmitter, receiver, transceiver, or any combination thereof, for communicating data at radio frequencies (RF).
(7) "Earth receiver" refers to any apparatus or device, or any part thereof, which received and processes signals from a GPS and/or pseudolites. Earth receivers may be situated on or near the Earth's surface. Morever, earth receivers may take the form of, for example, a vehicle or a base station.
(8) "GLONASS GPS" refers to the GPS which has been designed and which is currently being deployed by the U.S.S.R.
(9) "Global positioning system" or "GPS" is a type of terrestrial position determination system. In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined. The U.S. government has designated its GPS the "NAVSTAR". The government of the U.S.S.R. has designated its GPS the "GLONASS".
(10) "GPS data" means all data encoded on signals transmitted from GPS satellites of a GPS. GPS data includes, for example, ephemeris data and time data.
(11) "GPS processing system" refers to the system of the present invention for receiving signals from a terrestrial position determination system and for deriving first position estimates of vehicles from the received signals. In the preferred embodiment, the GPS processing system receives electromagnetic signals from GPS satellites of a GPS and/or from pseudolites.
(12) "Inertial reference unit" or "IRU" refers to a system, usually on-board a vehicle, for aiding in the derivation of a second position estimate of the vehicle. An IRU obtains specific-force measurements from accelerometers in a reference coordinate frame which is stabilized by gyroscopes, or gyros. An IRU can be of a laser type or a mechanical type. In an unaided navigation system using an IRU, the specific force (corrected for the effects of the Earth's gravity) as measured by an accelerometer is integrated into a navigation mathematical equation to produce the vehicle's position and velocity. In the preferred embodiment, the IRU is part of the MPS.
(13) "Motion positioning system" or "MPS" means a system comprising at least an. IRU and a vehicle odometer. In the preferred embodiment, the MPS derives the second position estimate of any vehicle on or near the Earth's surface. Morever, an MPS need not be present at the base station due to its stationary nature.
(14) "Optimal constellation" means a satellite constellation in which the relative positions of the GPS satellites in space affords superior triangulation capabilities in order to derive the most accurate estimate of a point on or near the Earth's surface.
(15) "NAGSTAR GPS" means the GPS which has been designed and which is currently being deployed by the U.S. government.
(16) "Navigation system" refers to any systems and/or methods for guiding any vehicle on or near the Earth's surface. The navigation systems can be on-board a vehicle. The VPS of the present invention can supply the navigation system of the vehicle with a very accurate, third position estimate of the vehicle so that the navigation system can thereby precisely guide the vehicle.
(17) "Satellite position predictor" is a method for determining the future positions of GPS satellites. The method allows for the selection of optimal constellations ahead of time.
(18) "System" is used for shorthand purposes to mean apparatus, method, or a combination of both apparatus and method. Morever, it could include software, hardware, or a combination of hardware and software.
(19) "Position determination system" means any system having sources which emanate signals which can be used by a receiver of the signals to estimate the relative distance between the sources and the receiver. The signals may be in the form of, for example, electromagnetic waves, percussion waves, and/or sound waves.
(20) "Terrestrial position determination system" means any position determination system which can be used to ultimately estimate the terrestrial position of an Earth receiver. The signals may be in the form or, for example, electromagnetic waves, percussion waves, and/or sound waves. In the preferred embodiment, the terrestrial position determination system is the NAVSTAR GPS.
(21) "Vehicle" means any carrier for the transportation of physical things. Vehicles may take the form of mining trucks, construction trucks, farm tractors, automobiles, ships, boats, trains, balloons, missiles, or aircraft. In the preferred embodiment, a Caterpillar Inc. 785 pff-highway truck is utilized.
(22) "Vehicle positioning system" of "VPS" refers to the system of the present invention for deriving position estimates of any vehicle. The position estimates from the VPS are extremely accurate and can be used gy a navigation system on any vehicle to accurately guide the vehicle. In the preferred embodiment, position estimates from the VPS are referred to as third position estimates.

### General Overview

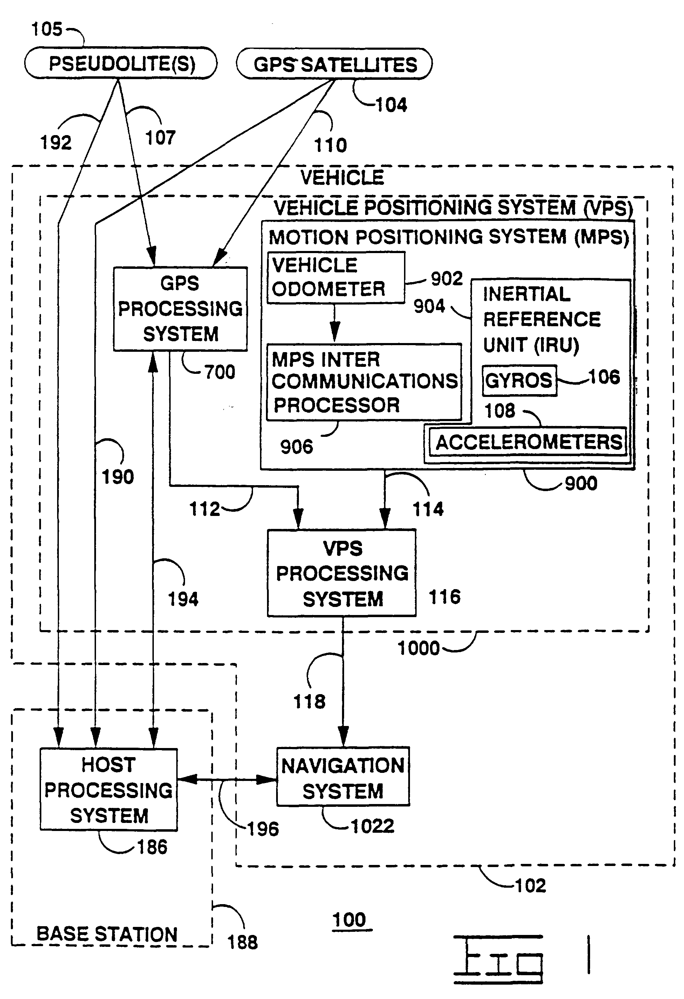

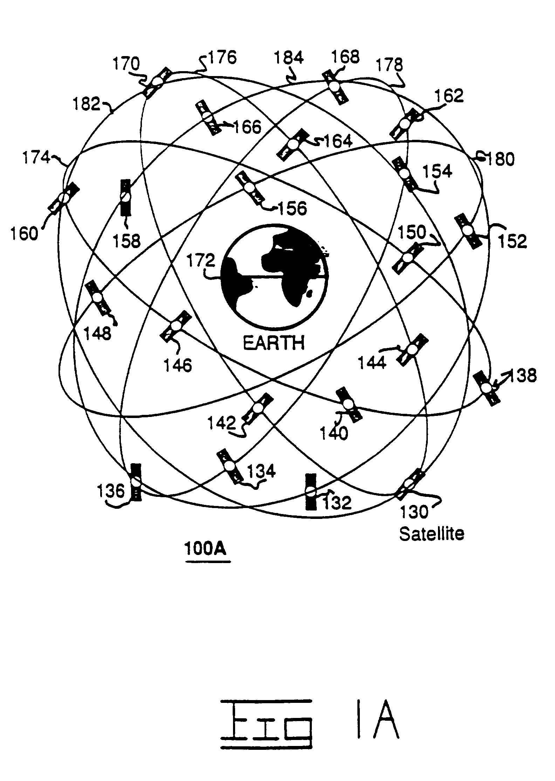

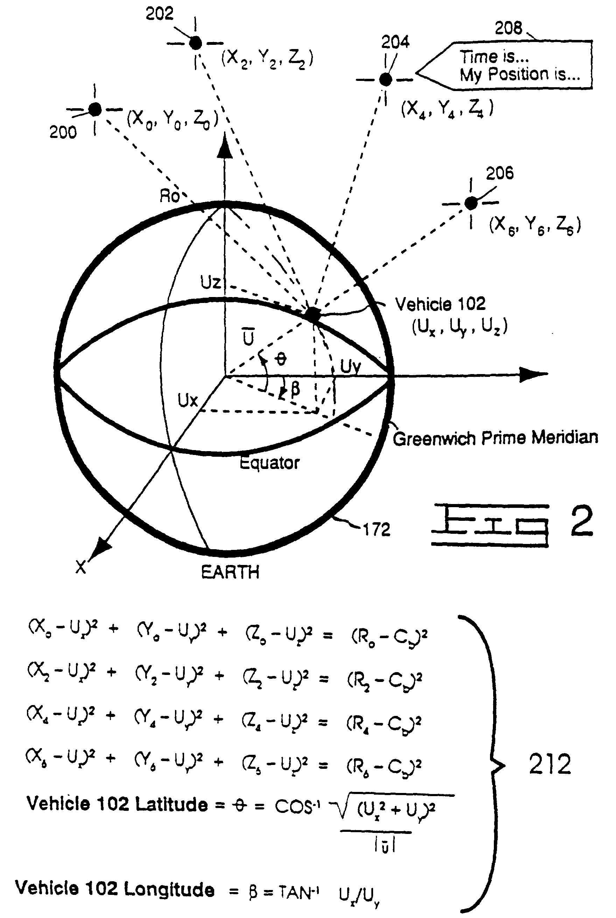

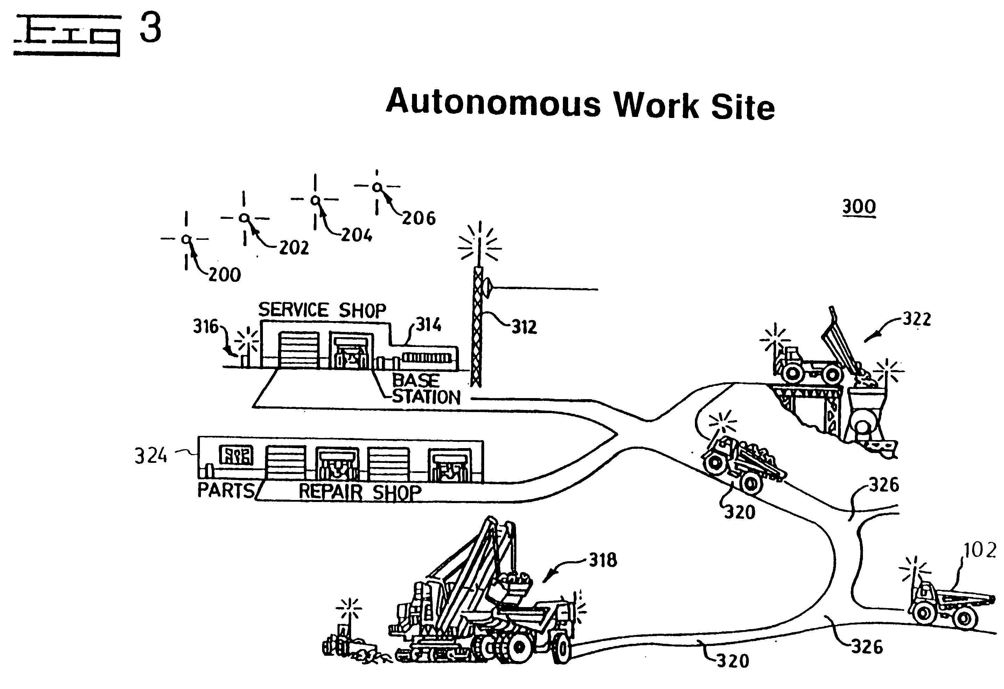

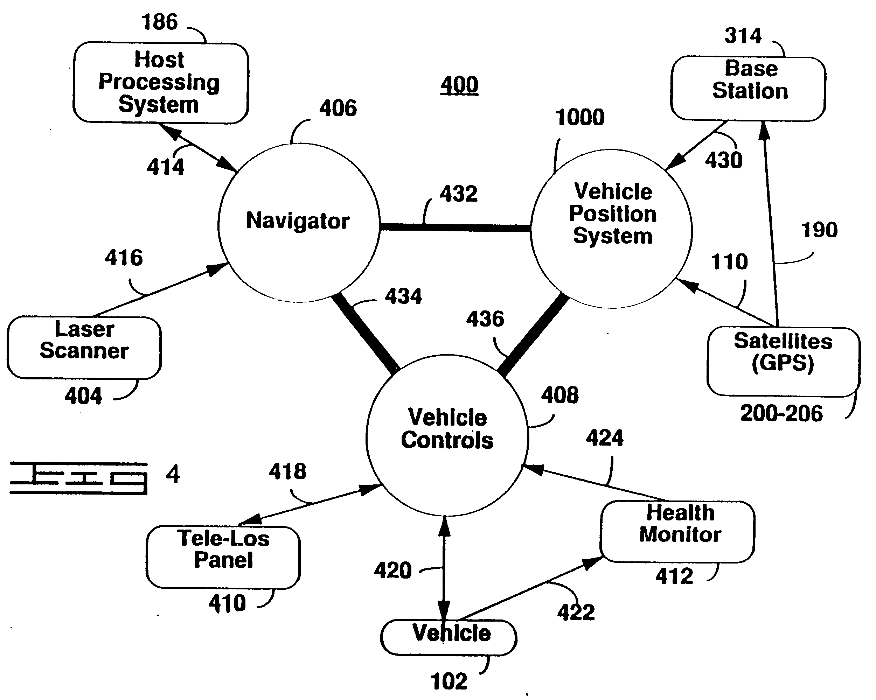

Figure 1 illustrates a high level block diagram 100 of the preferred embodiment of the present invention. To provide for the accurate autonomous operation of a vehicle 102 on or near the Earth's surface, the present invention includes both a vehicle positioning system (VPS) 1000 and a navigation system 1022. Both of these systems include apparatus, methods, and techniques which, when integrated together, provide for highly accurate control of unmanned vehicles.

### Vehicle Positioning System (VPS)

The task of guiding the autonomous vehicle 102 along a prescribed path requires, among other things, an accurate estimate of the vehicle's current position relative to some reference point. Once the current position is known, the vehicle 102 can be commanded to proceed to its next destination.

Using the VPS 1000 of the present invention, position estimates of the vehicle 102 can be determined with extreme preciseness. The VPS 1000 receives GPS data from GPS satellites 104 of a GPS, such as the NAVSTAR GPS or the GLONASS GPS.

In the preferred embodiment, the NAVSTAR GPS is utilized. Figure 1A illustrates the NAVSTAR GPS. GPS satellites 130-168 travel around the Earth 172 in six orbits 174-184.

Referring back to Figure 1, the VPS 1000 also may receive pseudolite data from a pseudolite(s) 105. The term "pseudolite" in the context of this document means a radiating device on or near the Earth's surface for emulating a GPS satellite.

From the GPS data and/or the pseudolite data, the VPS 1000 derives accurate estimates of position of the vehicle 102. The GPS data and/or the pseudolite data is significantly enhanced via numerous inventive techniques and methods of the present invention to enhance the accuracy of vehicle position estimates.

More specifically, the VPS 1000 of the preferred embodiment is a positioning system based on the incorporation of GPS data from the NAVSTAR GPS 104 and from a motion positioning system 900. In the preferred embodiment, the motion positioning system 900 comprises an inertial reference unit (IRU) 904 and/or a vehicle odometer 902. The IRU 904 comprises a laser gyroscope(s) 106 and an accelerometer(s) 108 which can be used to produce position, velocity, roll, pitch and yaw data. The vehicle odometer 902 produces data on the distance travelled by the vehicle 102.

A first position estimate of the vehicle 102 is derived by the GPS processing system 700 from GPS data received from the GPS satellites 104 and from the pseudolite data received from the pseudolite(s) 105. To increase the accuracy of the first position estimate the present invention implements a number of methods discussed in detail below. In addition, a second position estimate is derived by the MPS intercommunications processor 906 of the motion positioning system 900, which comprises the IRU 904 and/or the vehicle odometer 902.

As shown by respective arrows 112 and 114, the first position estimate and the second position estimate are then combined and filtered by a VPS processing system 116. The result as shown by an output arrow 118 is a more accurate, third position estimate.

### Navigation System

The navigation system 1022 receives the third position estimate from the VPS 1000. The navigation system 1022 uses the precise, third position estimate to accurately navigate the vehicle 102. A primary purpose of the navigation system 1022 is to guide the vehicle 102 between points along pre-established or dynamically-generated paths.

In the preferred embodiment, the navigation system 1022 is situated on the vehicle 102 itself. In other words, it is essentially an "on-board" system. Moreover, the navigation system 1022 may be designed to be retrofitted into the vehicle 102.

So that the navigation system 1022 can guide the vehicle 102 to follow the pre-established or dynamically-generated paths, various models or conceptual representations are generated and utilized. For example, lines and arcs may be used to establish vehicle paths between objective points. Mathematical B-splines or clothoid curves may be used to model the actual path where the vehicle 102 is to navigate. These mathematical curves will be discussed in detail later in this document.

Using the above modelling or representational techniques provides for enhanced data communications, storage, and handling of the vehicle 102. The techniques further allow for simplification of supervisory tasks by providing a hierarchy of control and communication. The higher that a level of control exists on the hierarchical control scheme, the simpler the task and the more compact the commands.

The navigation system 1022 further provides for controlling the vehicle's mechanical systems, such as brakes, steering, and engine and transmission, to effect the necessary physical acts required to move, stop, and steer the vehicle 102.

The navigation system 1022 also checks the actual position of the vehicle 102 against the desired position to correct vehicle control in accord with the desired position. The navigation system 1022 may run multi-state models to enhance this checking capability. The navigation system 1022 also checks for errors or failures in the system itself and vehicle components. If errors or failures are detected, the navigation system 1022 can provide for fail-safe shutdown by bringing the vehicle 102 to a complete stop.

The navigation system 1022 further provides for different modes of controlling the vehicle 102. These include (1) a fully autonomous mode, where navigation of the vehicle 102 is automatically handled by the navigation system 1022; (2) a tele or remote control mode, where a remote human operator (not shown) may control the direction and motion, and so on, of the vehicle 102; and (3) a manual mode, where a human operator sitting in the vehicle 102 can take control of the vehicle 102 and drive it manually.

In the autonomous mode, obstacle detection is critical because if the vehicle 102 is not under control, then it could cause great damage to property and great injury to life. The navigation system 1022 can efficiently detect obstacles. Boulders, animals, people, trees, or other obstructions may enter the path of the vehicle 102 unexpectedly. The navigation system 102 is capable of detecting these obstacles, either stopping or plotting a path around the obstruction, and returning the vehicle 102 to its original route when the route is deemed safe.

Accurately tracking the desired route is another function of the navigation system 1022. The functioning and architecture of the navigation system 1022 has been designed for real time tracking of vehicle paths at speeds of up to approximately 30 miles per hour (mph).

### C. Base Station

The present invention can comprise a host processing system 186 at a base station 188. The host processing system 186 performs functions for both the VPS 1000 and the navigation system 1022.

With respect to the VPS 1000, the host processing system 186 receives GPS data and/or pseudolite data, as shown by respective arrows 190 and 192. In effect, the host processing system 186 as well as the base station 188 can serve as a known reference point to improve the accuracy of vehicle position estimates as discussed in detail below.

The host processing system 186 implements a number of methods for increasing the accuracy of vehicle position estimates. The satellite position predictor method 1800 discussed above is also implemented by the host processing system 186. The host processing system 186 will recognize the same satellite constellation that is observed by the vehicle 102.

Calculations are performed on the GPS data and/or. pseudolite data to derive biases. The term "bias" in the context of this document refers to a differential between two measurements, usually position estimates (spatial bias) or clock rates (clock bias). Because one measurement is usually known to be more accurate than another, the bias is often times referred to as an "error."

To compute spatial biases, the host processing system 186 implements a number of methods. Included in these methods are, for example, an original bias
technique 1500 , a parabolic bias
technique 1600 a base residuals bias
technique , and a base correlator bias technique 1700A.

The foregoing differential correction techniques compensate for data errors. In other words, the biases computed at the host processing system 186 are indicative of data errors. As shown by an arrow 194, the biases are transmitted to the GPS processing system 700 of the vehicle 102. The GPS processing system 700 uses these biases to eliminate errors in vehicle position estimates.

The host processing system 186 further provides functions relating to the navigation system 1022 of the present invention. The host processing system 186 serves as the highest level of control of the navigation system 1022, as indicated by an arrow 196. It handles scheduling and dispatching of the vehicle 102 with much the same results as a human dispatcher would achieve. Consequently, the host processing system 186 can thereby determine the work cycle of the vehicle 102.

The host processing system 186 commands the vehicle 102 to proceed from a current position to a future position via a specified route, so that the vehicle 102 may accomplish its work goals. The host processing system 186 can specify the vehicle routes by name, rather than by listing each point along the route, as is the case conventionally. Accordingly, the vehicle's on-board navigation system 1022 looks up the named vehicle route and translates the named vehicle route into sets-of nodes and segments along the named vehicle route.

### FUNCTIONAL DESCRIPTIONS/METHODS

### 1. NAVIGATOR

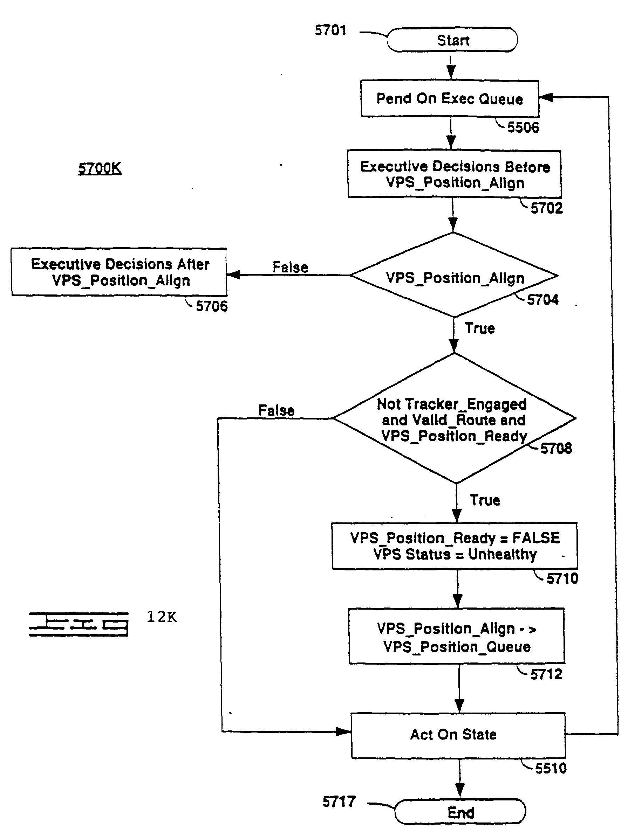

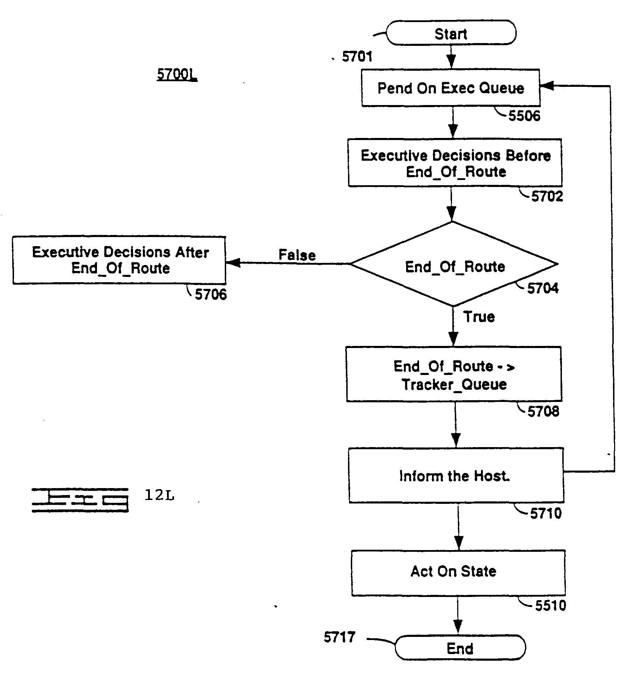

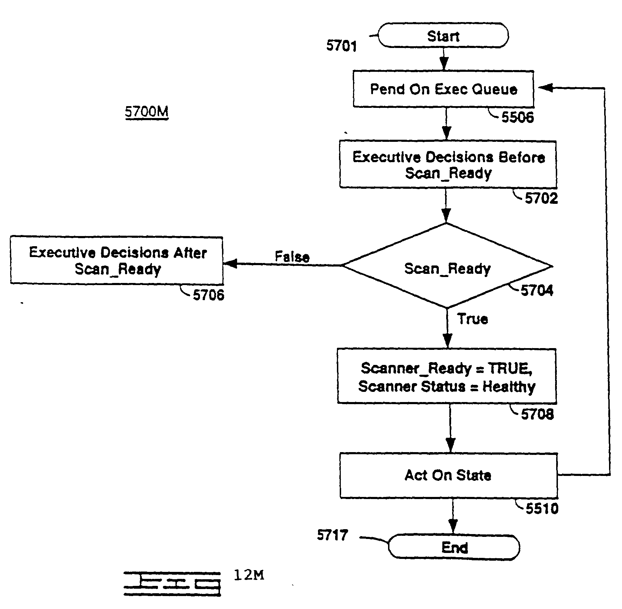

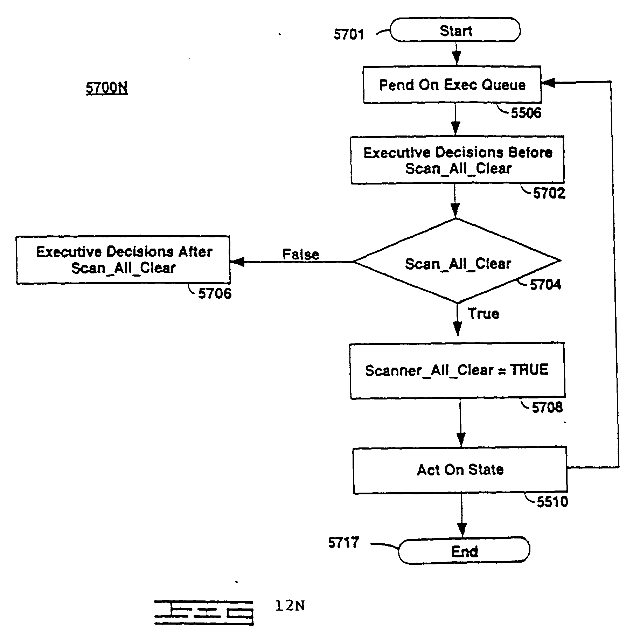

The following is a description of the navigator 406, shown in Figure 7, titled TASK DIAGRAM. Each of the tasks diagrammed is discussed below.

### a. MAIN (executive)

In the center of Figure 7 is a task labelled "main (exec)" 5316. This task 5316 coordinates inter-task communications and performs high level decision making for the navigator 406. One of the primary decisions the task 5316 makes is when to (dis)engage the tracker 5306, based on messages received from the other tasks in the system.

### b. MONITOR_VEH STATUS

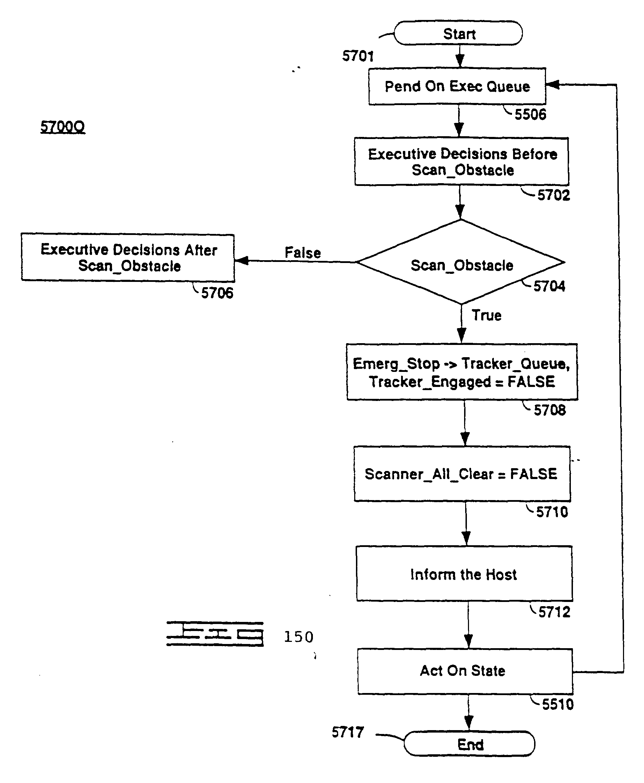

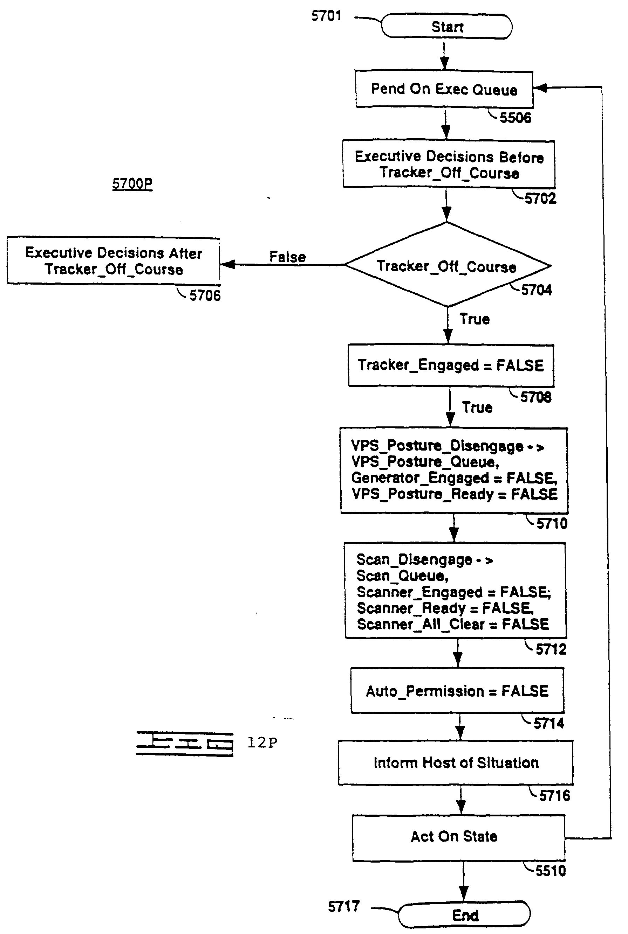

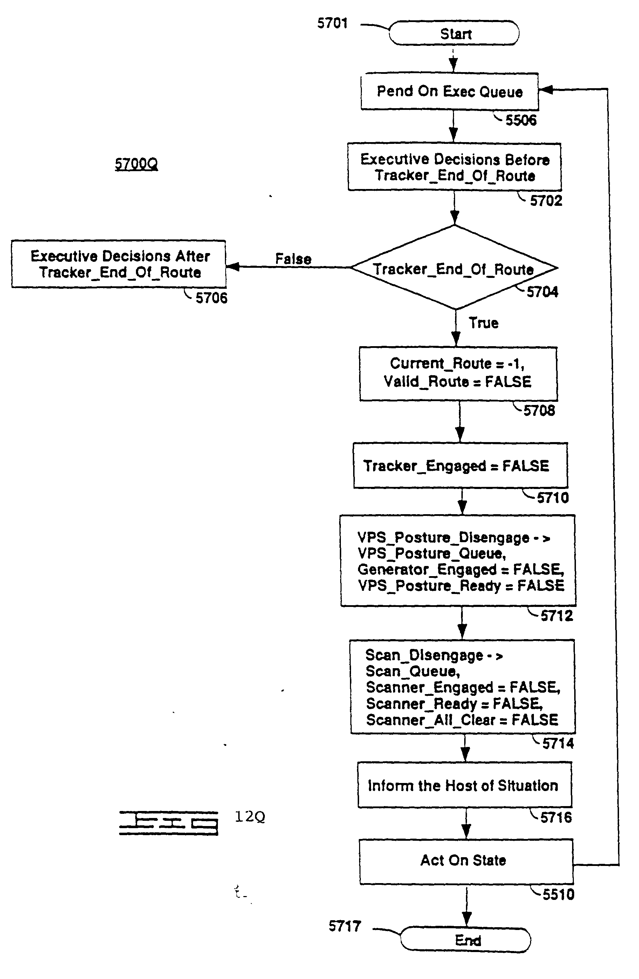

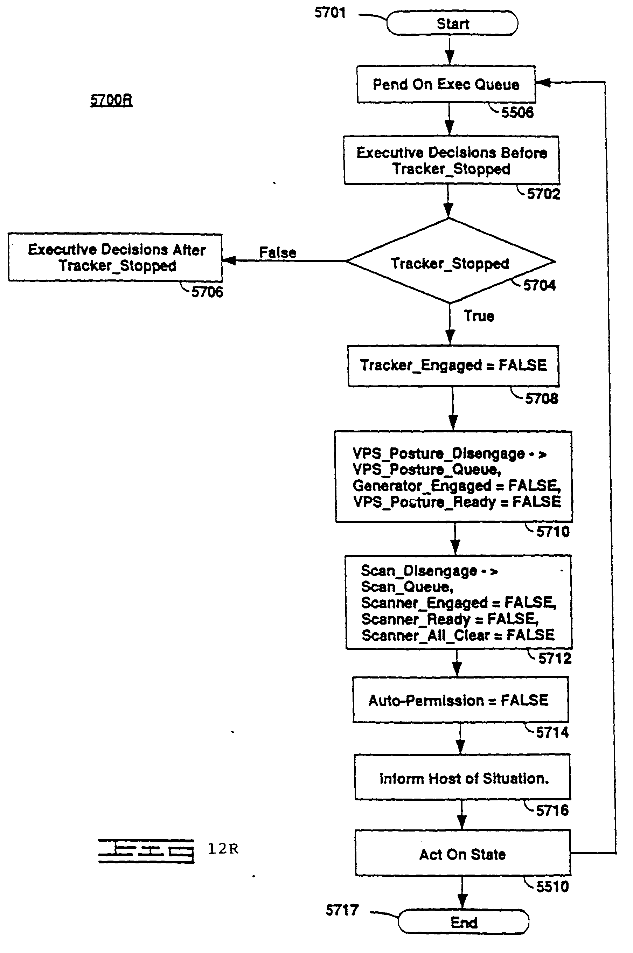

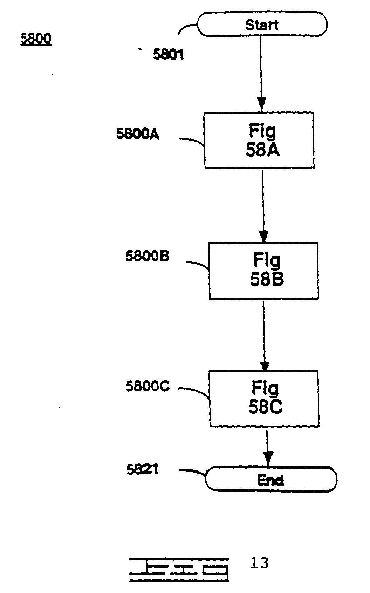

This task 5308 is shown above and to the right of the "main" task 5316. It functions to read the vehicle port 5326, and report vehicle mode changes and navigator-to-vehicle communication state to the "main" 5316 via the EXEC QUEUE 5328. Additionally, the status of the vehicle 102 is written to a global memory structure 5400 (see Figure 8).

### c. SCANNER

Shown in the lower right-hand corner of the task diagram Figure 7 is the scanner task 53n10, which provides for communication to the "main" 5316 of data from the obstacle detection system 404.

### d. CONSOLE AND CONSOLE_PARSER

The console 5312 and the console-parser 5314 are shown just below the "main" task 5316 in the task diagram Figure 7. These tasks were developed as a debugging tool during the development of the system. They display and manipulate navigator 406 states according to user input from a terminal 5302. The console_parser task 5314 also is used to set tracker parameters.

### e. GET_DIRECTIVES

This task 5320 is shown in the upper left-hand corner of the task diagram Figure 7. It is part of the host-navigator interface 5330. Messages from the host processing system 186 are received and decoded by this task 5320. Then, depending on the message, the message is either communicated to the "main" task 5316, or to another task. This other task would then formulate an appropriate response from the navigator 406 to the host processing system 186.

### f. MSG_TO_HOST

This task 5318, shown just above and to the left of the "main" task 5316, formulates messages from the navigator 406 to the host processing system 186 and communicates them to the host processing system 186.

### g. VPS_POSITION

This task 5322 is shown at the left side of the task diagram Figure 7. The vps_position task 5322 reads the (20 Hz) output from the VPS 1000. The data is checked for correctness (for example, "checksum") and if correct, it is put into a global memory structure 5400, the position buffer (VPS_POSITION_QUEUE) 5332. The task sends a message to the "main" 5316 whenever a position fault occurs.

### h. VPS_POSTURE

This task 5324 is shown at the lower left-hand corner of the task diagram. When the vehicle is tracking, this task maintains the posture buffer (VPS_POSTURE_QUEUE) 5334. The task (5324) monitors the vehicle's position and maintains approximately 50 postures, from the current vehicle position in the direction of travel, in the posture buffer (3000).

### i. TRACKER

Shown in the upper right-hand corner of the task diagram Figure 7 , the task 5306 reads the current position 5332 and posture buffers 5334. Based on the information read, task 5306 calculates steer and speed corrections 420. It sends them to the vehicle 102, thereby controlling the vehicle's course.

### j. NAVIGATOR SHARED (GLOBAL) MEMORY

As mentioned above with regard to the navigator tasks 5300, the navigator 406 has a global memory structure 5400 which the various tasks read/write. This memory structure 5400 is illustrated in Figure 8.

Referring now to Figure 8, the tasks are depicted as ellipsoids, with the particular task written inside. The memory 5400 is depicted in the center section of Figure 8 as a stack of boxes. Unprotected memory is depicted as a single box in the stack of boxes. Semaphore protected memory is depicted as a box within a box in the stack.

An arrow points in the direction of data transfer between tasks and memory. Therefore, a write to memory from a task is shown as a line with an arrow pointing towards the memory in question from the task. Likewise, a read from memory by a task is depicted by a line with an arrow pointing towards the task in question from the memory. Where two-way data transfer between task and memory exists, a line with an arrow at both ends is shown.

### MAIN (EXEC) FLOW CHARTS

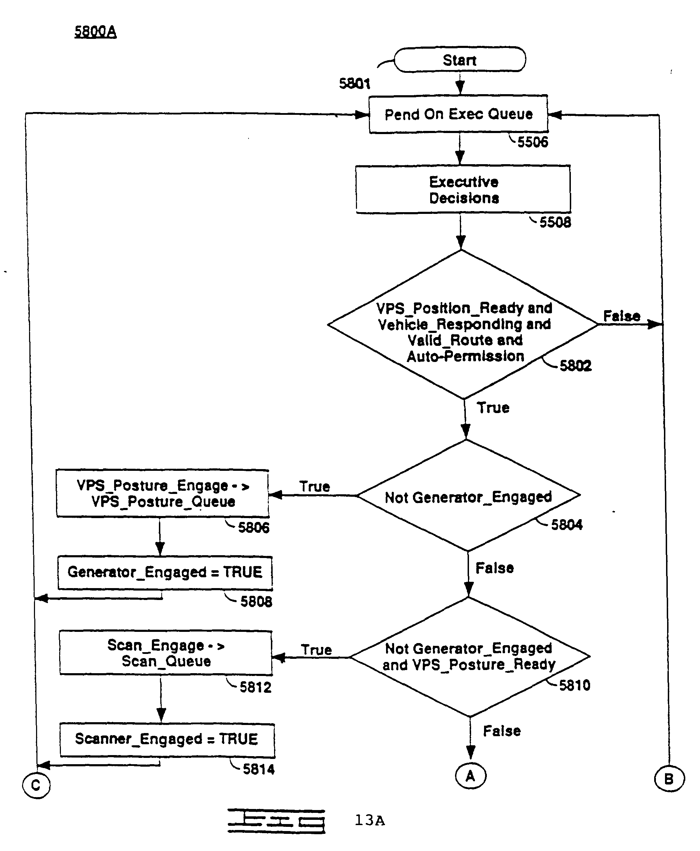

Figures 9 and 11A-11D are flow charts of the navigator main or executive task 5316.

Referring first to Figure 9, it is a diagram of the general structure of the main or executive task flow. The following describes several flowcharts associated with the navigator executive task 5316.

Referring to Figure 9, which is the executive flowchart, it shows of five blocks: block 5502 which is the Start block; block 5504 which is the initialize navigator; block 5506, which is the Pend on Exec Queue; block 5506, which is the executive decisions; and block 5510, which is the act on state.

Flowchart Figure 9 describes how the executive task 5316 executes its functions beginning at power up (switching on electrical power) of the navigator 406. Upon power up, the executive task 5316 (or Executive) begins at the start block 5502 and proceeds immediately to initialize navigator 5504, where the executive 5316 puts the navigator 406 in a known initial state. The executive then proceeds to the Pend on exec queue 5506 and waits for a message from a number of sources to arrive in its message queue 5328. For example, atypical message could be a query for information from the host processing system 186.

Upon receipt of a message in the Exec Queue 5328, the executive 5316 proceeds to the executive decisions block 5508. In this block, the executive 5316 sets a series of status flags in a known manner. These flags put the navigator 406 in a known state, particular to the message received.

Once the status flags have been properly set, the executive 5316 then proceeds to the Act on State 5510, where the necessary action is carried out according to the type of instruction received.

Referring now to Figures 11 A- 11D they show the flow of the "executive decisions" block 5508 of the general structure diagram Figure 9.

The various responses which the executive task 5316 can initiate are now described in more detail. There are a known set of messages which are expected within the Exec Queue 5328. These messages are shown in detail in Figures 11A-11D.

Figure 11A diagrams the organization of Figures 11A-11D. Figures 11A-11D describe in detail the procedure which the executive 5316 uses to respond to various messages.

Referring to Figure 11A, the action of the executive 5316 to particular messages is described. Upon receipt of a message to the Exec Queue 5328, the program flow leaves block 5506 and proceeds to block 5602, where the executive 5316 determines if the message is 'NEW_ROUTE_DIRECTIVE'. If the message is 'NEW_ROUTE_DIRECTIVE', then the executive 5316 proceeds to the Act On "NEW_ROUTE_DIRECTIVE' block 5604. Once the action particular to the 'NEW_ROUTE_DIRECTIVE' message has been completed successfully, the executive 5316 then proceeds to the Act on State block 5510. Once the action has been completed, the executive 5316 returns to the Pend on Exec Queue block 5506 to await another message. If the initial message in block 5602 is not 'NEW_ROUTE_DIRECTIVE', then the executive 5316 proceeds to block 5606 to determine if the message is 'CHANGE_SPEED_DIRECTIVE'.

The response to messages such as 'CHANGE_SPEED_ DIRECTIVE', 'VEH_RESPONDING', NO_VEH_RESPONSE', and VEH_CHECKSUM_ERR', follow a procedure similar to that described for the message 'NEW_ROUTE_DIRECTIVE'. However, the actions performed in the Act On '....' blocks 5604 through 5620 are different for the different possible messages. The various types of valid messages and a brief description of each are:
NEW_ROUTE_DIRECTIVE: set the route number for the vehicle to follow.
CHANGE_SPEED DIRECTIVE: command a maximum possible speed for which the vehicle can traverse a particular part of the route.
VEH_RESPONDING: the vehicle is responding to commands properly, set Navigator status flags to Healthy.
NO_VEH_RESPONSE: the vehicle is not responding to commands, stop the vehicle.
VEH_CHECKSUM_ERR: the vehicle is not receiving/sensing data correctly, stop the vehicle.
TELE, MANUAL, READY, or AUTO: set the mode of the vehicle IN THE PROPER ORDER.
VPS_TIMOUT: VPS is not sending data, stop the vehicle.
VPS_CHECKSUM_ERROR: the VPS is sending garbled data, stop the vehicle.
VPS_POSTURE_READY: ready to generate path postures.
VPS_POSITION_READY: VPS data is available.
VPS_POSITION_ALIGN: the VPS is initializing, do not move the vehicle.
END_OF_ROUTE: the vehicle is approaching the end of the current route, has been reached inform the host processing system.
SCAN_READY: the scanning system is ready look for objects in the path.
SCAN_ALL_CLEAR: no objects have been detected in the vehicle path, continue normally.
SCAN_OBSTACLE: an object has been detected on the vehicle path, stop the vehicle.
TRACKER_OFF_COURSE: the vehicle is not following the desired path within tolerance, stop the vehicle.
TRACKER_END_OF_ROUTE: tracker has reached the end of the path, stop the vehicle.
TRACKER_STOPPED: notify the Navigator that the tracking task has stopped the vehicle.

The responses to the messages 'TELE', 'MANUAL', 'AUTO', and 'READY' are somewhat different because these messages are related and must be acted upon in a specific order. This has been described above. The program flow for these messages is shown in Figures 11A and 11 B with respect to block 5622-5630.

The response to subsequent message possibilities are depicted by blocks 5632 through 5678 in Figures 11 B through 11 D. These responses are similar to those described for the message 'NEW_ROUTE_DIRECTIVE'.

If the received message is not one of the expected messages, or if the message is garbled, then the executive 5316 is directed to block 5680, where the host processing system 186 is informed of the problem. The executive 5316 then returns to the Exec Queue 5506 to respond to the next message in the queue.

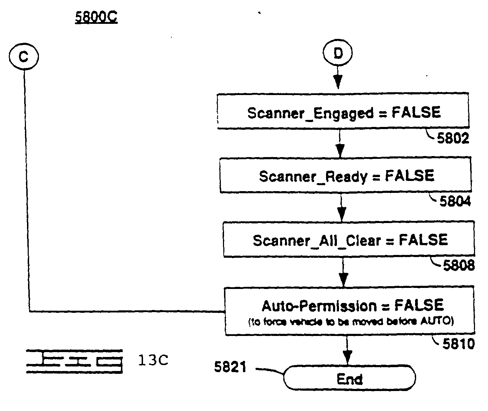

Figures 12 A through 12 R show the specific procedures which the executive 5316 uses to respond to a particular message. For example, Figure 57A details how the executive 5316 responds to a 'NEW_ROUTE_DIRECTIVE' message. Once this message arrives in the Exec Queue 5328, the executive 5316 then proceeds to a flowchart block 5702 to determine what the message is: in this case, 'NEW_ROUTE_DIRECTIVE'. If the message is 'NEW_ROUTE_DIRECTIVE', the executive 5316 then proceeds to a flowchart block 5705 to respond to the message. Otherwise, it proceeds on to a flowchart block 5704 to determine if it is valid (one of the other possible messages) or invalid.

Given that the message is a 'NEW_ROUTE_DIRECTIVE', then the executive 5316 follows the process described in Figure 12A to respond to the message. This process is depicted by blocks 5706 through 5714. In this procedure (and in responses to other directives), the executive 5316 checks the states of different tasks within the navigator 406 and reacts to these states in a known, predetermined manner.

The effect of this response is to set a series of status flags, which effect subsequent responses by other tasks in the navigator 406 when the executive 5316 reaches the Act On State 5510. The actual procedures implemented in block 5510 is shown in Figure 13.

The responses of the executive 5316 to other valid messages are similar to that described for the 'NEW_ROUTE_DIRECTIVE'. The effect of each response to directives first changes a set of flags, which in turn affect the state of the navigator 406. The particular flags set depend on the particular directive. The navigator 406 responds to the changes in these flags when the executive 5316 moves to the Act On State block 5510.

Figures 13 A-13C illustrate the flow of the "act on state" block 5510.

The act on state block 5510 is shown in Figures 13A-13C. Figure 13 shows the interrelationship of Figures 13A-13C, where each of these three figures depict a portion of the Act On State block 5510.

Once the executive task 5316 has set the appropriate flags in response to a particular Exec message, the executive 5316 then proceeds to send messages to the appropriate tasks or entities which must be informed of changes to the navigator 406 system as a result of the Exec message.

For example, when the executive task 5316 leaves the executive decisions 5508, and first enters the act on state block 5510, it checks to see that the status is set such that the vehicle is ready for autonomous mode (for example - VPS is ready, vehicle is communicating properly, a proper route has been commanded, and the vehicle is ready for auto mode). See block 5802. If one or more of these conditions is not met, then the Exec returns to wait for another valid message. If all of these conditions are met, then the executive 5316 checks to see that the path generator 5804 is operating. If so, then the executive 5316 proceeds to start the other systems required for autonomous operation.

If the path generation system is not operating, then the executive 5316 task sends the message 'VPS_POSTURE_ENGAGE' to the Vps Posture Queue 5334, in order to start the path generator. The executive task will then return to the Pend on Exec Queue 5506, to wait for another directive so that proper operation of the vehicle 102 is ensured.

## Claims

1. A method of operating an autonomous navigation system (406) on a vehicle, the method comprising the steps of:
(1) initializing (5504) the system (406);
(2) waiting (5506) for messages to arrive in a message queue (5328);
(3) upon receipt of a message, determining and setting (5508) a series of status flags to place the system (406) in a known state particular to the message;
(4) carrying out (5510) an appropriate action in accordance with the message;
(5) returning to step (2).

2. A method according to claim 1, wherein the step of determining and setting (5508) a series of flags comprises the steps of:
(a) determining (5602) if a received message is a new route directive message and if true, then in step (4) set (5604) a route number for the vehicle (102) to follow;
(b) determining (5606) if a received message is a change speed directive message and if true, then in step (4) command (5608) a maximum speed for the vehicle (102);
(c) determining (5610) if a received message is a vehicle responding message and if true, then in step (4) set (5612) status flags to healthy;
(d) determining (5614) if a received message is a no vehicle responding message and if true, then in step (4) set (5616) status flags to unhealthy;
(e) determining (5618) if a received message is a vehicle checksum error message and if true, then in step (4) set (5620) status flags to unhealthy;
(f) determining (5622) if a received message is a tele-mode message and if true, then in step (4) set (5624) the vehicle (102) to tele-operation mode;
(g) determining (5626) if a received message is a manual-mode message and if true, then in step (4) set (5624) the vehicle (102) to manual operation mode;
(h) determining (5628) if a received message is an auto-mode message and if true, then in step (4) set (5624) the vehicle to autonomous operation mode;
(i) determining (5630) if a received message is a ready mode message and if true, then in step (4) set (5624) the vehicle (102) to ready operation mode;
(j) determining (5632) if a received message is a VPS timeout message and if true, then in step (4) conduct (5634) an emergency stop of the vehicle (102);
(k) determining (5636) if a received message is a VPS checksum error message and if true, then in step (4) conduct (5638) an emergency stop of the vehicle;
(l) determining (5640) if a received message is a VPS posture ready message and if true, then in step (4) set (5642) a vps-posture-ready flag true;
(m) determining (5644) if a received message is a VPS position ready message and if true, then in step (4) set (5646) a vps-position-ready flag true;
(n) determining (5648) if a received message is a VPS position align message and if true, then in step (4) wait (5650) until VPS has completed initialization;
(o) determining (5652) if a received message is a end of route message and if true, then in step (4) inform (5654) a host computer;
(p) determining (5656) if a received message is a scan ready message and if true, then in step (4) begin (5658) to scan for objects in front of the vehicle (102);
(q) determining (5660) if a received message is a scan all clear message and if true, then in step (4) indicate (5662) no objects have been detected;
(r) determining (5664) if a received message is a scan obstacle message and if true, then in step (4) indicate (5666) an obstacle has been detected in front of the vehicle (102);
(s) determining (5668) if a received message is a tracker off course message and if true, then in step (4) indicate (5670) the vehicle is not following a desired path within tolerance and stop the vehicle;
(t) determining (5672) if a received message is a tracker end of route message and if true, then in step (4) indicate (5674) the vehicle has reached an end of the route and stop the vehicle;
(v) determining (5676) if a received message is a tracker stopped message and if true, then in step (4) indicate (5678) that the tracker has stopped the vehicle (102);
(w) determining (5676) if a received message is not one of the above messages and if true, then in step (4) inform (5680) a host computer of an error condition.

3. An autonomous navigation system (406) on a vehicle, the system comprising:
(1) means (5504) for initializing the system (406);
(2) means (5506) for waiting for messages to arrive in a message queue (5328), comprising means (5508) for determining and means (5508) for setting a series of status flags to place the system (406) in a known state particular to a message, activated upon receipt of a message; and
(3) means (5510) for carrying out an appropriate action in accordance with the message.

4. A system (406) according to claim 3, wherein the means (5506) for waiting for messages further comprises:
(a) means (5602) for determining if a received message is a new route directive message and if true, then causing (5604) the means (5510) for carrying out to set a route number for the vehicle (102) to follow;
(b) means (5606) for determining if a received message is a change speed directive message and if true, then causing (5608) the means (5510) for carrying out to command a maximum speed for the vehicle (102);
(c) means (5610) for determining if a received message is a vehicle responding message and if true, then causing (5612) the means (5510) for carrying out to set status flags to healthy;
(d) means (5614) for determining if a received message is a no vehicle responding message and if true, then causing (5616) the means (5510) for carrying out to set status flags to unhealthy;
(e) means (5618) for determining if a received message is a vehicle checksum error message and if true, then causing (5620) the means (5510) for carrying out to set status flags to unhealthy;
(f) means (5622) for determining if a received message is a tele-mode message and if true, then causing (5624) the means (5510) for carrying out to set the vehicle (102) to tele-operation mode;
(g) means (5626) for determining if a received message is a manual-mode message and if true, then causing (5624) the means (5510) for carrying out to set the vehicle to manual operation mode;
(h) means (5628) for determining if a received message is an auto-mode message and if true, then causing (5624) the means (5510) for carrying out to set the vehicle to autonomous operation mode;
(i) means (5630) for determining if a received message is a ready mode message and if true, then causing (5624) the means (5510) for carrying out to set the vehicle (102) to ready operation mode;
(j) means (5632) for determining if a received message is a VPS timeout message and if true, then causing (5634) the means (5510) for carrying out to conduct an emergency stop of the vehicle (102);
(k) means (5636) for determining if a received message is a VPS checksum error message and if true, then causing (5638) the means (5510) for carrying out to conduct an emergency stop of the vehicle (102);
(l) means (5640) for determining if a received message is a VPS posture ready message and if true, then causing (5642) the means (5510) for carrying out to set a vps-posture-ready flag true;
(m) means (5644) for determining if a received message is a VPS position ready message and if true, then causing (5646) the means (5510) for carrying out to set a vps-position-ready flag true;
(n) means (5648) for determining if a received message is a VPS position align message and if true, then causing (5650) the means (5510) for carrying out to wait until VPS has completed initialization;
(o) means (5652) for determining if a received message is a end of route message and if true, then causing (5654) the means (5510) for carrying out to inform a host computer;
(p) means (5656) for determining if a received message is a scan ready message and if true, then causing (5658) the means (5510) for carrying out to begin to scan for objects in front of the vehicle;
(q) means (5660) for determining if a received message is a scan all clear message and if true, then causing (5662) the means (5510) for carrying out to indicate no objects have been detected;
(r) means (5664) for determining if a received message is a scan obstacle message and if true, then causing (5666) the means (5510)for carrying out to indicate an obstacle has been detected in front of the vehicle;
(s) means (5668) for determining if a received message is a tracker off course message and if true, then causing (5670) the means (5510) for carrying out to indicate the vehicle is not following a desired path within tolerance and stop the vehicle;
(t) means (5672) for determining if a received message is a tracker end of route message and if true, then (5674) causing the means (5510) for carrying out to indicate the vehicle has reached an end of the route and stop the vehicle;
(v) means (5676) for determining if a received message is a tracker stopped message and if true, then causing (5678) the means (5510) for carrying out to indicate that the tracker has stopped the vehicle;
(w) means (5676) for determining if a received message is not one of the above messages and if true, then causing (5680) the means (5510) for carrying out to inform a host computer of an error condition.

## Patentansprüche

1. Verfahren zum Betrieb eines autonomen Navigationssystems (406) bei einem Fahrzeug, wobei das Verfahren folgende Schritte aufweist:
(1) Initialisierung (5504) des Systems (406)
(2) Warten (5506) bis Nachrichten in einer Nachrichtenschlange (5328) ankommen;
(3) Beim Empfang einer Nachricht Bestimmung und Setzen (5508) einer Reihe von Zustands-Flags bzw. Zustandszeichen, um das System (406) in einen bekannten Zustand speziell für diese Nachricht zu setzen;
(4) Ausführung (5510) eines entsprechenden Vorgangs gemäß der Nachricht;
(5) Rückkehr zum Schritt (2).

2. Verfahren nach Anspruch 1, wobei der Schritt der Bestimmung und des Setzens (5508) einer Reihe von Flags bzw. Zeichen folgende Schritte aufweist:
(a) Bestimmung (5602), ob eine empfangene Nachricht eine eine neue Route anzeigende Nachricht ist, und falls dies wahr ist, dann Einstellung (5604) im Schritt (4) einer Routennummer für das Fahrzeug (102) das folgen soll;
(b) Bestimmung (5606), ob eine empfangene Nachricht eine Geschwindigkeitswechselanweisungsnachricht ist, und falls dies wahr ist, dann Anweisung (5608) im Schritt (4) einer maximalen Geschwindigkeit für das Fahrzeug (102);
(c) Bestimmung (5610), ob eine empfangene Nachricht eine Fahrzeugansprechnachricht ist, und falls die wahr ist, dann Setzen (5612) eines Zustands-Flags auf gesund im Schritt (4);
(d) Bestimmung (5614), ob eine empfangene Nachricht eine Nicht-Fahrzeugansprechnachricht ist, und falls dies wahr ist, dann Setzen (5616) des Zustands-Flags auf nicht gesund im Schritt (4);
(e) Bestimmung (5618), ob eine empfangene Nachricht eine Fahrzeugchecksummenfehlernachricht ist, und falls dies wahr ist, dann Setzen (5620) eines Zustands-Flags auf nicht gesund im Schritt (4);
(f) Bestimmung (5622), ob eine empfangene Nachricht eine Tele-Betriebszustandsnachricht ist, und falls dies wahr ist, dann Setzen (5624) des Fahrzeugs (102) auf den Tele-Betriebszustand im Schritt (4);
(g) Bestimmung (5626), ob eine empfangene Nachricht eine Manuell-Betriebszustandsnachricht ist, und falls dies wahr ist, dann Setzen (5624) des Fahrzeuges (102) auf den manuellen Betriebszustand im Schritt (4);
(h) Bestimmung (5628), ob eine empfangene Nachricht eine Automatik-Betriebszustandsnachricht ist, und falls dies wahr ist, dann Setzen (5624) des Fahrzeuges (102) auf den autonomen Betriebszustand im Schritt (4);
(i) Bestimmung (5630), ob eine empfangene Nachricht eine Fertig-Betriebszustandsnachricht ist, und falls dies wahr ist, dann Setzen (5624) des Fahrzeuges (102) auf den Fertig-Betriebszustand im Schritt (4);
(j) Bestimmung (5632), ob eine empfangene Nachricht eine VPS- bzw. Fahrzeugspositionsbestimmungs-Zeitüberlaufnachricht ist, und falls dies wahr ist, dann Ausführung (5638) eines Notstoppes des Fahrzeuges (102) im Schritt (4);
(k) Bestimmung (5632), ob eine empfangene Nachricht eine VPS- bzw. Fahrzeugspositionsbestimmungs-Chechsummenfehlernachricht ist, und falls dies wahr ist, dann Ausführung (5638) eines Notstoppes des Fahrzeuges im Schritt (4);
(l) Bestimmung (5640), ob eine empfangene Nachricht eine VPS- bzw. Fahrzeugspositionsbestimmungs-Lage-Fertig -Nachricht ist, und falls dies wahr ist, dann Setzen (5642) eines VPS-Lage-Fertig-Flags auf wahr im Schritt (4);
(m) Bestimmung (5644), ob eine empfangene Nachricht eine VPS- bzw. Fahrzeugspositionsbestimmungs-System-Position-Fertig-Nachricht ist, und falls dies wahr ist, dann Setzen (5646) eines VPS-Position-Fertig-Flags auf wahr im Schritt (4);
(n) Bestimmung (5648), ob eine empfangene Nachricht eine VPS- bzw. Fahrzeugspositionsbestimmungs-Positionsausrichtungsnachricht ist, und falls dies wahr ist, dann Warten (5650) bis das Fahrzeugpositionsbestimmungssystem die Initialisierung vollendet hat, und zwar im Schritt (4);
(o) Bestimmung (5652), ob eine empfangene Nachricht eine Routenendenachricht ist, und falls dies wahr ist, dann Informieren (5654) eines Host-Computers im Schritt (4);
(p) Bestimmung (5656), ob eine empfangene Nachricht eine Abtastungs-Fertig-Nachricht ist, und falls dies wahr ist, dann Beginnen (5658) nach Objekten vor dem Fahrzeug (102) abzutasten, und zwar im Schritt (4);
(q) Bestimmung (5660), ob eine empfangene Nachricht eine Abtastung-Alles-frei-Nachricht ist, und falls dies wahr ist, dann Anzeige (5662), daß keine Objekte detektiert worden sind, und zwar im Schritt (4);
(r) Bestimmung (5664), ob eine empfangene Nachricht eine Hindernis-abgetastet-Nachricht ist, und falls dies wahr ist, dann Anzeige (5666), daß ein Hindernis vor dem Fahrzeug (102) detektiert worden sind, und zwar im Schritt (4);
(s) Bestimmung (5668), ob eine empfangene Nachricht eine Verfolgungsvorrichtung-außer-Kurs-Nachricht ist, und falls dies wahr ist, dann Anzeige (5670), daß das Fahrzeug nicht einem erwünschten Pfad innerhalb der Toleranz folgt, und Stop des Fahrzeugs, und zwar im Schritt (4);
(t) Bestimmung (5672), ob eine empfangene Nachricht eine Verfolgungsvorrichtung-Routenende-Nachricht ist, und falls dies wahr ist, dann Anzeige (5674), daß das Fahrzeug ein Routenende erreicht hat, und Stop des Fahrzeugs, und zwar im Schritt (4);
(v) Bestimmung (5676), ob eine empfangene Nachricht eine Verfolgungsvorrichtung-Stop-Nachricht ist, und falls dies wahr ist, dann Anzeige (5678), daß die Verfolgungsvorrichtung das Fahrzeug (102) gestoppt hat, und zwar im Schritt (4);
(w) Bestimmung (5676), ob eine empfangene Nachricht nicht eine der obigen Nachrichten ist, und wenn dies wahr ist, dann Informieren (5680) eines Hostcomputers über einen Fehlerzustand im Schritt (4).

3. Autonomes Navigationssystem (406) bei einem Fahrzeug, wobei das System folgendes aufweist:
(1) Mittel (5504) zur Initialisierung des Systems (406);
(2) Mittel (5506) zum Warten auf Nachrichten, die in einer Nachrichtenschlange (5328) ankommen, die Mittel (5508) zur Bestimmung und zum Einstellen bzw. Setzen einer Reihe von Zustands-Flags bzw. Zustandszeichen aufweisen, um das System (406) in einen bekannten Zustand speziell für diese Nachricht zu setzen, und zwar aktiviert beim Empfang einer Nachricht; und
(3) Mittel (5510) zur Ausführung eines entsprechenden Vorgangs gemäß der Nachricht.

4. System (406) nach Anspruch 3, wobei die Mittel (5506) zum Warten auf Nachrichten weiter folgendes aufweisen:
(a) Mittel (5602) zur Bestimmung, ob eine empfangene Nachricht eine eine neue Route anweisende Nachricht ist, und falls dies wahr ist, dann Bewirken (5604), daß die Mittel (5510) zur Ausführung eine Routennummer für das Fahrzeug (102) setzen, das folgen soll;
(b) Mittel (5606) zur Bestimmung, ob eine empfangene Nachricht eine Geschwindigkeitswechselanweisungsnachricht ist, und falls dies wahr ist, dann Bewirken (5608), daß die Mittel (5510) zur Ausführung eine Maximalgeschwindigkeit für das Fahrzeug (102) anweisen;
(c) Mittel (5610) zur Bestimmung, ob eine empfangene Nachricht eine Fahrzeugansprechnachricht ist, und falls dies wahr ist, dann Bewirken (5612), daß die Mittel (5510) zur Ausführung die Zustands-Flags auf gesund setzen;
(d) Mittel (5614) zur Bestimmung, ob eine empfangene Nachricht eine Nicht-Fahrzeugansprechnachricht ist, und falls dies wahr ist, dann Bewirken (5616), daß die Mittel (5510) zur Ausführung die Zustands-Flags auf nicht gesund setzen;
(e) Mittel (5618) zur Bestimmung, ob eine empfangene Nachricht eine Fahrzeugchecksummenfehlernachricht ist, und falls dies wahr ist, dann Bewirken (5620), daß die Mittel (5510) zur Ausführung die Zustands-Flags auf nicht gesund setzen;
(f) Mittel (5622) zur Bestimmung, ob eine empfangene Nachricht eine Tele-Betriebszustandsnachricht ist, und falls dies wahr ist, dann Bewirken (5624), daß die Mittel (5510) zur Ausführung das Fahrzeug (102) in einen Tele-Betriebszustand setzen;
(g) Mittel (5626) zur Bestimmung, ob eine empfangene Nachricht eine Manuell-Betriebszustandsnachricht ist, und falls dies wahr ist, dann Verursachen (5624), daß die Mittel (5510) zur Ausführung das Fahrzeug (102) auf den manuellen Betriebszustand setzen;
(h) Mittel (5628) zur Bestimmung, ob eine empfangene Nachricht eine Automatik-Betriebszustandsnachricht ist, und falls dies wahr ist, dann Bewirken (5624), daß die Mittel (5510) zur Ausführung das Fahrzeug (102) in den autonomen Betriebszustand setzen;
(i) Mittel (5630) zur Bestimmung, ob eine empfangene Nachricht eine Fertig-Betriebszustandsnachricht ist, und falls dies wahr ist, dann Bewirken (5624), daß die Mittel (5510) zur Ausführung das Fahrzeug (102) in den Fertig-Betriebszustand setzen;
(j) Mittel (5632) zur Bestimmung, ob eine empfangene Nachricht eine VPS-Zeitüberlauf-Nachricht ist, und falls dies wahr ist, dann Bewirken (5634), daß die Mittel (5510) einen Notstop beim Fahrzeug (102) ausführen;
(k) Mittel (5636) zur Bestimmung, ob eine empfangene Nachricht eine VPS- bzw. Fahrzeugspositionsbestimmungssystem-Checksummenfehlernachricht ist, und falls dies wahr ist, dann Bewirken (5638), daß die Mittel (5510) zur Ausführung einen Notstop beim Fahrzeug (102) ausführen;
(l) Mittel (5640) zur Bestimmung, ob eine empfangene Nachricht eine VPS- bzw. Fahrzeugspositionsbestimmungs-Lage-Fertig-Nachricht ist, und falls dies wahr ist, dann Bewirken (5642), daß die Mittel (5510) zum Ausführen ein VPS-Lage-Fertig-Flag auf wahr setzen;
(m) Mittel (5644) zur Bestimmung, ob eine empfangene Nachricht eine VPS-Positionsbestimmung-Fertig-Nachricht ist, und falls dies wahr ist, dann Bewirken (5646), daß die Mittel (5510) zum Ausführen ein VPS-Position-Fertig-Flag auf wahr setzen;
(n) Mittel (5648) zur Bestimmung, ob eine empfangene Nachricht eine VPS-Position-ausgerichtet-Nachricht ist, und falls dies wahr ist, dann Bewirken (5650), daß die Mittel (5510) zur Ausführung warten, bis das VPS- bzw. Fahrzeugpositionsbestimmungssystem die Initialisierung vollendet hat;
(o) Mittel (5652) zur Bestimmung, ob eine empfangene Nachricht eine Routenendenachricht ist, und falls dies wahr ist, dann Bewirken (5654), daß die Mittel (5510) zur Ausführung einen Host- bzw. Hauptcomputer informieren;
(p) Mittel (5656) zur Bestimmung, ob eine empfangene Nachricht eine Abtastung-Fertig-Nachricht ist, und falls dies wahr ist, dann Bewirken (5658), daß die Mittel (5510) zur Ausführung beginnen, Objekte vor dem Fahrzeug (102) abzutasten;
(q) Mittel (5660) zur Bestimmung, ob eine empfangene Nachricht eine Abtastung-Alles-frei-Nachricht ist, und falls dies wahr ist, dann Bewirken (5662), daß die Mittel (5510) zur Ausführung anzeigen, daß keine Objekte detektiert worden sind;
(r) Mittel (5664) zur Bestimmung, ob eine empfangene Nachricht eine Hindernis-abgetastet-Nachricht ist, und falls dies wahr ist, dann Bewirken (5666), daß die Mittel (5510) zur Ausführung anzeigen, daß ein Hindernis vor dem Fahrzeug (102) detektiert worden ist;
(s) Mittel (5668) zur Bestimmung, ob eine empfangene Nachricht eine Verfolgungsvorrichtung-außer-Kurs-Nachricht ist, und falls dies wahr ist, dann Bewirken (5670), daß die Mittel (5510) zum Ausführen anzeigen, daß das Fahrzeug nicht einem erwünschten Pfad innerhalb der Toleranz folgt, und Stoppen des Fahrzeugs;
(t) Mittel (5672) zur Bestimmung, ob eine empfangene Nachricht eine Verfolgungsvorrichtung-Routenende-Nachricht ist, und falls dies wahr ist, dann Bewirken (5674), daß die Mittel (5510) zur Ausführung anzeigen, daß das Fahrzeug ein Routenende erreicht hat, und Stoppen des Fahrzeugs;
(v) Mittel (5676) zur Bestimmung, ob eine empfangene Nachricht eine Verfolgungsvorrichtung-Stop-Nachricht ist, und falls dies wahr ist, dann Bewirken (5678), daß die Mittel (5510) zur Ausführung an-' zeigen, daß die Verfolgungsvorrichtung das Fahrzeug (102) gestoppt hat;
(w) Mittel (5676) zur Bestimmung, ob eine empfangene Nachricht nicht eine der obigen Nachrichten ist, und wenn dies wahr ist, dann Bewirken (5680), daß die Mittel (5510) zur Ausführung einen Hostcomputer über einen Fehlerzustand informieren.

## Revendications

1. Procédé d'actionnement d'un système de navigation autonome (406) sur un véhicule, ce procédé comprenant les étapes suivantes :
(1) initialiser (5504) le système (406) ;
(2) attendre (5506) que des messages arrivent dans une file de messages (5328) ;
(3) à la réception d'un message, déterminer et établir (5508) une succession de drapeaux d'état pour placer le système (406) dans un état connu spécifique au message ;
(4) effectuer (5510) une action appropriée en accord avec le message ;
(5) revenir à l'étape (2).

2. Procédé selon la revendication 1, dans lequel l'étape de détermination et d'établissement (5508) d'une succession de drapeaux comprend les étapes suivantes :
(a) déterminer (5602) si un message reçu est un message d'ordre d'un nouveau trajet et, si oui, à l'étape (4), établir (5604) un numéro de trajet à suivre pour le véhicule (102) ;
(b) déterminer (5606) si un message reçu est un message d'ordre de changement de vitesse et, si oui, à l'étape (4), commander (5608) une vitesse maximum pour le véhicule (102) ;
(c) déterminer (5610) si un message reçu est un message de réponse de véhicule et, si oui, à l'étape (4), établir (5612) des drapeaux d'état à "bon" ;
(d) déterminer (5614) si un message reçu est un message de non réponse de véhicule et, si oui, à l'étape (4), mettre (5616) des drapeaux d'état à "mauvais" ;
(e) déterminer (5618) si un message reçu est un message d'erreur de total de contrôle de véhicule et, si oui, à l'étape (4), mettre (5620) des drapeaux d'état à "mauvais" ;
(f) déterminer (5622) si un message reçu est un message de mode de télécommande et, si oui, à l'étape (4), mettre (5624) le véhicule (102) dans le mode de télécommande ;
(g) déterminer (5626) si un message reçu est un message de mode manuel et, si oui, à l'étape (4), mettre (5624) le véhicule (102) à mode de fonctionnement manuel ;
(h) déterminer (5628) si un message reçu est un message de mode autonome et, si oui, à l'étape (4), mettre (5624) le véhicule à mode de fonctionnement autonome ;
(i) déterminer (5630) si un message reçu est un message de mode prêt et, si oui, à l'étape (4), mettre (5624) le véhicule (102) au mode de fonctionnement prêt ;
(j) déterminer (5632) si un message reçu est un message d'arrêt de système de positionnement de véhicule (VPS) et, si oui, à l'étape (4), effectuer (5634) un arrêt d'urgence du véhicule (102) ;
(k) déterminer (5636) si un message reçu est un message d'erreur de total de contrôle de VPS et, si oui, à l'étape (4), effectuer (5638) un arrêt d'urgence du véhicule ;
(l) déterminer (5640) si un message reçu est un message prêt de posture de VPS et, si oui, à l'étape (4), mettre un drapeau de posture (5642) de VPS prêt à l'état vrai ;
(m) déterminer (5644) si un message reçu est un message de position de VPS prêt et, si oui, à l'étape (4), mettre (5646) un drapeau vrai de position de VPS prêt ;
(n) déterminer (5648) si un message reçu est un message d'alignement de position de VPS et, si oui, à l'étape (4), attendre (5650) jusqu'à ce que le VPS ait achevé son initialisation ;
(o) déterminer (5652) si un message reçu est un message de fin de route et, si oui, à l'étape (4), informer (5654) un calculateur hôte ;
(p) déterminer (5656) si un message reçu est un message d'analyse prête et, si oui, à l'étape (4), commencer (5658) à analyser des objets devant le véhicule (102) ;
(q) déterminer (5660) si un message reçu est un message d'analyse vide et, si oui, à l'étape (4), indiquer (5662) qu'aucun objet n'a été détecté ;
(r) déterminer (5664) si un message reçu est un message d'analyse d'obstacle et, si oui, à l'étape (4), indiquer (5666) qu'un obstacle a été détecté devant le véhicule (102) ;
(s) déterminer (5668) si un message reçu est un message de sortie de trajet et, si oui, à l'étape (4), indiquer (5670) que le véhicule ne suit pas un trajet désiré dans une tolérance' donnée et arrêter le véhicule ;
(t) déterminer (5672) si un message reçu est un message de fin de poursuite de trajet et, si oui, à l'étape (4), indiquer (5674) que le véhicule a atteint une fin de trajet et arrêter le véhicule ;
(v) déterminer (5676) si un message reçu est un message de poursuite arrêtée et, si oui, à l'étape (4), indiquer (5678) que la poursuite a arrêté le véhicule (102) ; et
(w) déterminer (5676) si un message reçu n'est pas l'un des messages ci-dessus et, si oui, à l'étape (4), informer (5680) un ordinateur hôte d'un état d'erreur.

3. Système de navigation autonome (406) sur un véhicule, le système comprenant :
(1) un moyen (5504) pour initialiser le système (406) ;
(2) un moyen (5506) pour attendre que des messages arrivent dans une file de messages (5328), comprenant un moyen (5508) de détermination et un moyen (5508) pour établir une succession de drapeaux d'état pour placer le système (406) dans un état connu spécifique à un message, actionné à la suite de la réception d'un message ; et
(3) un moyen (5510) pour effectuer une action appropriée en accord avec le message.

4. Système (406) selon la revendication 3, dans lequel le moyen (5506) pour attendre des messages comprend en outre :
(a) un moyen (5602) pour déterminer si un message reçu est un message d'ordre d'un nouveau trajet et, si oui, amener (5604) le moyen (5510) à établir un numéro de trajet à suivre pour le véhicule (102) ;
(b) un moyen (5606) pour déterminer si un message reçu est un message d'ordre de changement de vitesse et, si oui, amener (5608) le moyen (5510) à commander une vitesse maximum pour le véhicule (102) ;
(c) un moyen (5610) pour déterminer si un message reçu est un message de réponse de véhicule et, si oui, amener (5612) le moyen (5510) à établir des drapeaux d'état à "bon" ;
(d) un moyen (5614) pour déterminer si un message reçu est un message de non réponse de véhicule et, si oui, amener (5616) le moyen (5510) à mettre des drapeaux d'état à "mauvais" ;
(e) un moyen (5618) pour déterminer si un message reçu est un message d'erreur de total de contrôle de véhicule et, si oui, amener (5620) le moyen (5510) à mettre des drapeaux d'état à "mauvais" ;
(f) un moyen (5622) pour déterminer si un message reçu est un message de mode de télécommande et, si oui, amener (5624) le moyen (5510) à mettre le véhicule (102) dans le mode de télécommande ;
(g) un moyen (5626) pour déterminer si un message reçu est un message de mode manuel et, si oui, amener (5624) le moyen (5510) à mettre le véhicule à mode de fonctionnement manuel ;
(h) un moyen (5628) pour déterminer si un message reçu est un message de mode autonome et, si oui, amener (5624) le moyen (5510) à mettre le véhicule à mode de fonctionnement autonome ;
(i) un moyen (5630) pour déterminer si un message reçu est un message de mode prêt et, si oui, amener (5624) le moyen (5510) à mettre le véhicule (102) au mode de fonctionnement prêt ;
(j) un moyen (5632) pour déterminer si un message reçu est un message d'arrêt de système de positionnement de véhicule (VPS) et, si oui, amener (5634) le moyen (5510) à effectuer un arrêt d'urgence du véhicule (102) ;
(k) un moyen (5636) pour déterminer si un message reçu est un message d'erreur de total de contrôle de VPS et, si oui, amener (5638) le moyen (5510) à effectuer un arrêt d'urgence du véhicule (102) ;
(l) un moyen (5640) pour déterminer si un message reçu est un message prêt de posture de VPS et, si oui, amener (5642) le moyen (5510) à mettre un drapeau de posture de VPS prêt à l'état vrai ;
(m) un moyen (5644) pour déterminer si un message reçu est un message de position de VPS prêt et, si oui, amener (5646) le moyen (5510) à mettre un drapeau vrai de position de VPS prêt ;
(n) un moyen (5648) pour déterminer si un message reçu est un message d'alignement de position de VPS et, si oui, amener (5650) le moyen (5510) à attendre jusqu'à ce que le VPS ait achevé son initialisation ;
(o) un moyen (5652) pour déterminer si un message reçu est un message de fin de route et, si oui, amener (5654) le moyen (5510) à informer un calculateur hôte ;
(p) un moyen (5656) pour déterminer si un message reçu est un message d'analyse prête et, si oui, amener (5658) le moyen (5510) à commencer à analyser des objets devant le véhicule ;
(q) un moyen (5660) pour déterminer si un message reçu est un message d'analyse vide et, si oui, amener (5662) le moyen (5510) à indiquer qu'aucun objet n'a été détecté ;
(r) un moyen (5664) pour déterminer si un message reçu est un message d'analyse d'obstacle et, si oui, amener (5666) le moyen (5510) à indiquer qu'un obstacle a été détecté devant le véhicule ;
(s) un moyen (5668) pour déterminer si un message reçu est un message de sortie de trajet et, si oui, amener (5670) le moyen (5510) à indiquer que le véhicule ne suit pas un trajet désiré dans une tolérance donnée et arrêter le véhicule ;
(t) un moyen (5672) pour déterminer si un message reçu est un message de fin de poursuite de trajet et, si oui, amener (5674) le moyen (5510) à indiquer que le véhicule a atteint une fin de trajet et arrêter le véhicule ;
(v) un moyen (5676) pour déterminer si un message reçu est un message de poursuite arrêtée et, si oui, amener (5678) le moyen (5510) à indiquer que la poursuite a arrêté le véhicule ;
(w) un moyen (5676) pour déterminer si un message reçu n'est pas l'un des messages ci-dessus et, si oui, amener (5680) le moyen (5510) à informer un ordinateur hôte d'un état d'erreur.
